# EUROPÄISCHE PATENTSCHRIFT

(11) **EP 2 069 653 B1**
(45) Veröffentlichungstag und Bekanntmachung des Hinweises auf die Patenterteilung: **24.02.2010**
(21) Anmeldenummer: 07820741.2
(22) Anmeldetag: 01.10.2007
(51) Int. Cl.: F16D 48/02

(54) **DRUCKMITTELBETÄTIGBARE STEUERUNGSVORRICHTUNG EINES AUTOMATISIERTEN STUFENSCHALTGETRIEBES**
PRESSURE MEDIUM-ACTUATED CONTROL DEVICE OF AN AUTOMATED STEP-BY-STEP VARIABLE SPEED TRANSMISSION
DISPOSITIF DE CONTRÔLE, POUVANT ÊTRE ACTIONNÉ PAR UNE PRESSION, D'UN MÉCANISME DE COMMUTATION PROGRESSIVE AUTOMATISÉ

(30) Priorität: 02.10.2006 DE 102006046710
(43) Veröffentlichungstag der Anmeldung: 17.06.2009
(73) Patentinhaber: ZF Friedrichshafen AG, 88038 Friedrichshafen (DE)
(72) Erfinder: HERRMANN, Markus, 88175 Scheidegg (DE); JOHN, Thomas, 97529 Sulzheim (DE)
(86) Internationale Anmeldenummer: PCT/EP2007/060355
(87) Internationale Veröffentlichungsnummer: WO 2008/040693

(56) Entgegenhaltungen:
- DE-A1- 10 210 612
- DE-A1-102004 020 569
- DE-A1-102004 033 362

## Beschreibung

Die Erfindung betrifft eine druckmittelbetätigbare Steuerungsvorrichtung eines automatisierten Stufenschaltgetriebes, mit einem ansteuerbaren Kupplungsregelventil zur Steuerung eines Kupplungsstellzylinders einer im Kraftfluss zwischen einem Antriebsmotor und einer Eingangswelle des Stufenschaltgetriebes angeordneten aktiv schließbaren Trennkupplung, und mit einem im Druckversorgungszweig des Kupplungsregelventils angeordneten Selbsthalteventil zur drehzahlabhängigen Notbetätigung der Trennkupplung.

Automatisierte Stufenschaltgetriebe sind sowohl in der Bauart eines automatisierten Schaltgetriebes (ASG) mit einer einzigen Trennkupplung als auch in der Bauart eines automatisierten Doppelkupplungsgetriebes (DKG) mit zwei jeweils einem von zwei Teilgetrieben zugeordneten Trennkupplungen in unterschiedlichen Ausführungsformen seit längerem bekannt und werden auch in Serienfahrzeugen eingesetzt. Die Steuerungsvorrichtung eines automatisierten Schaltgetriebes umfasst Stellantriebe, wie Gangsteller zum Ein- und Auslegen der Gänge und einen Kupplungssteller zum Schließen und Öffnen einer im Kraftfluss zwischen dem Verbrennungsmotor und der Eingangswelle des Schaltgetriebes angeordneten Trennkupplung, sowie Steuerungselemente zur Steuerung der Stellantriebe. In ähnlicher Weise umfasst die Steuerungsvorrichtung eines automatisierten Doppelkupplungsgetriebes für jedes der beiden Teilgetriebe jeweils Stellantriebe, wie Gangsteller zum Ein- und Auslegen der zugeordneten Gänge und einen Kupplungssteller zum Öffnen und Schließen einer im Kraftfluss zwischen dem Verbrennungsmotor und der Eingangswelle des betreffenden Teilgetriebes angeordneten Trennkupplung, sowie Steuerungselemente zur Steuerung der betreffenden Stellantriebe.

Aufgrund einer hohen Energiedichte, guter Steuerungseigenschaften und der Verfügbarkeit technisch ausgereifter Komponenten sind die Steuerungsvorrichtungen automatisierter Schaltgetriebe und automatisierter Doppelkupplungsgetriebe zumeist hydraulisch ausgebildet, welches bedeutet, dass die betreffenden Gangsteller und Kupplungssteller als hydraulische Stellzylinder und die zugeordneten Steuerungselemente als hydraulische Schalt- oder Regelventile ausgebildet sind.

Die Schalt- und Regelventile können als Magnetventile ausgeführt sein und in dieser Bauart unmittelbar über jeweils einen elektrischen Steuerstrom angesteuert werden. Da dies aber entsprechend starke Elektromagneten mit relativ großen Abmessungen und vergleichsweise hohem Gewicht sowie relativ hohe elektrische Steuerströme erfordert, sind die Schalt- und Regelventile bevorzugt druckgesteuert ausgebildet und in dieser Bauart durch zumeist als kleinere Magnetventile ausgebildete Vorsteuerventile ansteuerbar.

Insbesondere bei schweren Nutzfahrzeugen, die mit einer pneumatischen Druckversorgungseinrichtung zur Energieversorgung einer für diese Fahrzeuggattung vorgeschriebenen Druckspeicher-Bremsanlage ausgerüstet sind, ist alternativ auch eine pneumatische Ausbildung von Steuerungsvorrichtungen entsprechender Stufenschaltgetriebe mit weitgehend identischem Aufbau und gleicher Funktionsweise möglich. Daher schließt die vorliegende Erfindung ebenso pneumatische Steuerungsvorrichtungen ein, auch wenn nachfolgend zur Erzielung einheitlicher Formulierungen nur von hydraulischen Steuerungsvorrichtungen die Rede ist.

Eine hydraulisch betätigbare Trennkupplung eines automatisierten Stufenschaltgetriebes (ASG, DKG) kann als nasslaufende Lamellenkupplung oder als eine Ein- oder Mehrscheiben-Trockenkupplung ausgeführt sein. Die Trennkupplung ist üblicherweise aktiv schließbar ausgebildet, so dass diese durch die Zufuhr eines hydraulischen Druckmittels über das zugeordnete Kupplungsregelventil in den Druckraum des Kupplungsstellzylinders schließbar und durch die Abfuhr des Druckmittels aus dem Druckraum bzw. durch eine Drucklosschaltung des Druckraums des Kupplungsstellzylinders über das Kupplungsregelventil ausrückbar ist. Dies hat zur Folge, dass die Trennkupplung bei Auftreten einer Störung in der zugeordneten Steuerungsvorrichtung durch den Wegfall des zugeordneten Steuersignals, insbesondere des Steuerdruckes des zugeordneten Vorsteuerventils, aufgrund der damit verbundenen Drucklosschaltung des Druckraums des Kupplungsstellzylinders öffnet.

Hierdurch wird bei einem mit einem automatisierten Schaltgetriebe mit nur einer Trennkupplung ausgerüsteten Kraftfahrzeug bewirkt, dass bei einem Auftreten einer Störung bei Fahrzeugstillstand ein Anfahren des Kraftfahrzeugs verhindert und bei einem Auftreten einer Störung während der Fahrt ein Ausrollen des Kraftfahrzeugs erzwungen wird. Dieses Steuerungsverhalten der Trennkupplung ist zwar in den meisten Fahrsituationen vorteilhaft, kann jedoch in bestimmten Fällen, wie beispielsweise bei einem Fahrzeughalt in einem Gefahrenbereich, beim Befahren einer Autobahn im dichten Verkehr und mit hoher Geschwindigkeit oder beim Befahren einer längeren Gefällstrecke zu einer unerwünschten Situation führen.

Eine entsprechende hydraulische Steuerungsvorrichtung eines Doppelkupplungsgetriebes ist beispielsweise aus der DE 101 34 115 A1 bekannt. Diese Steuerungsvorrichtung weist für jedes der beiden Teilgetriebe einen unabhängigen Steuerungskreis mit Gangregelventilen zur Steuerung von zwei Druckräumen mehrerer Gangsteller, mit einem Multiplexventil zur Verbindung der beiden Gangregelventile mit jeweils einem der Gangsteller und ein Kupplungsregelventil zur Steuerung der zugeordneten Trennkupplung auf. Die beiden Steuerungskreise sind jeweils über ein eigenes, dort jeweils als ein 3/2-Wege-Magnetschaltventil ausgebildetes Sicherheitsventil mit der Hauptdruckleitung verbindbar bzw. von dieser trennbar und drucklos schaltbar. Beim Auftreten einer nur einen Steuerungskreis betreffenden Einfachstörung kann der betreffende Steuerungskreis durch das Abschalten des zugeordneten Sicherheitsventils drucklos geschaltet werden, wodurch das zugeordnete Teilgetriebe unter Öffnung der betreffenden Trennkupplung außer Betrieb gesetzt wird. Eine Weiterfahrt ist dann im Notbetrieb über das andere Teilgetriebe möglich, wenn auch unter Inkaufnahme von großen Gangsprüngen und jeweils mit einer Zugkraftunterbrechung verbundenen Schaltvorgängen, so dass zumindest das Verlassen eines Gefahrenbereichs und das Erreichen einer Servicewerkstatt möglich sind. Tritt jedoch eine beide Teilgetriebe bzw. eine übergeordnete elektronische Getriebesteuerung (EGS) betreffende Hauptstörung auf, so werden beide Sicherheitsventile abgeschaltet und damit beide Teilgetriebe unter Öffnung der Trennkupplungen außer Betrieb gesetzt. Dies führt zwangsläufig zu einem von einem Fahrer nur noch begrenzt beeinflussbaren Liegenbleiben des Kraftfahrzeugs mit den zuvor schon genannten Nachteilen.

Zur Vermeidung dieses ungünstigen Steuerungsverhaltens im Störungsfall ist in der DE 10 2004 020 569 A1 eine hydraulische Steuerungsvorrichtung eines automatisierten Stufenschaltgetriebes (ASG + DKG) mit einem im Druckversorgungszweig des Kupplungsregelventils angeordneten Selbsthalteventil zur drehzahlabhängigen Notbetätigung einer zugeordneten Trennkupplung vorgeschlagen worden. Das Selbsthalteventil wird außer durch einen im Normalbetrieb verfügbaren Steuerdruck auch von einem permanent verfügbaren drehzahlabhängigen Steuerdruck beaufschlagt, und leitet in einer umgeschobenen Betriebsstellung einen Aktivierungssteuerdruck zu einem Aktivierungsventil weiter. Das Aktivierungsventil wird ebenfalls von einem im Normalbetrieb verfügbaren Steuerdruck in einer umgeschobenen Betriebsstellung gehalten, in welcher der zugeführte Aktivierungsdruck abgesperrt ist. Beim Auftreten einer Störung entfallen die im Normalbetrieb verfügbaren Steuerdrücke oder sinken zumindest stark ab. Hierdurch wird das Aktivierungsventil mittels seiner Ventilfeder in seine Ruhestellung gebracht, in welcher der Aktivierungsdruck in einen federabgewandten stirnseitigen Druckraum des Kupplungsregelventils weitergeleitet wird. Dadurch wird das Kupplungsregelventil in einer Betriebsstellung gehalten oder in diese verfahren, in welcher der Druckraum des Kupplungsstellzylinders mit einem Arbeitsdruck beaufschlagt und somit die Trennkupplung geschlossen gehalten bzw. geschlossen wird, wodurch eine Weiterfahrt des Kraftfahrzeugs im Notbetrieb möglich ist.

Diese Haltefunktion der Trennkupplung liegt jedoch nur bei einem ausreichend hohen drehzahlabhängigen Steuerdruck vor, der proportional zu der Drehzahl des Antriebsmotors oder proportional zu der Drehzahl der Ausgangswelle des Schaltgetriebes und damit der Fahrgeschwindigkeit des Kraftfahrzeugs sein kann. Unterschreitet der drehzahlabhängige Steuerdruck einen vorab festgelegten Grenzwert, so geht das Selbsthalteventil mittels seiner Ventilfeder in seine Ruhestellung über, in welcher der Aktivierungsdruck abgesperrt ist. Ohne die Beaufschlagung mit dem Aktivierungsdruck geht aber auch das Kupplungssteuerventil in seine Ruhestellung über, in welcher der Druckraum des Kupplungsstellzylinders drucklos geschaltet und somit die Trennkupplung geöffnet wird. Hierdurch wird vorteilhaft erreicht, dass ein mit dem Ausfall sicherheitsrelevanter Servoantriebe, wie etwa eines unterdruckgetriebenen Bremskraftverstärkers oder einer mechanisch angetriebenen Servopumpe einer Servolenkung, verbundenes Abwürgen des Antriebsmotors verhindert und ein von dem Fahrer noch begrenzt beeinflussbares Ausrollen des Kraftfahrzeugs ermöglicht wird.

Bei einer entsprechenden Steuerungsvorrichtung eines Doppelkupplungsgetriebes wird zudem durch ein dem Aktivierungsventil nachgeschaltetes und gegensinnig von den Arbeitsdrücken der beiden Trennkupplungen beaufschlagtes Kupplungswahlventil bewirkt, dass der von dem Aktivierungsventil durchgeschaltete Aktivierungsdruck nur zu dem Kupplungsregelventil des zum Zeitpunkt der Störung mit dem größeren Arbeitsdruck beaufschlagten Kupplungsstellzylinders geleitet wird. Dies hat zur Folge, dass die zum Zeitpunkt der Störung weiter geschlossene Trennkupplung vollständig geschlossen wird sowie nachfolgend geschlossen gehalten wird, und die andere Trennkupplung vollständig geöffnet wird, solange die Drehzahl des Antriebsmotors bzw. der Ausgangswelle des Doppelkupplungsgetriebes hinreichend hoch ist.

Trotz der vorteilhaften Funktionsvorteile der vorbeschriebenen Steuerungsvorrichtung besteht noch Verbesserungsbedarf im Hinblick auf die Ermöglichung eines Gangeinlegens bei eingestellter Leerlauffahrstufe N. So besteht bei mit automatisierten Stufenschaltgetrieben ausgerüsteten Kraftfahrzeugen in bestimmten Fahrsituationen der Wunsch, zur Beschleunigung bevorstehender Schaltvorgänge, wie bei einem Mehrfachwechsel zwischen der Rückwärtsfahrstufe R über die Leerlauffahrstufe N in die Vorwärtsfahrstufe D oder bei einem Wechsel von der Leerlauffahrstufe N in die Vorwärtsfahrstufe D, schon bei eingestellter Leerlauffahrstufe N bei einem automatisierten Schaltgetriebe einen Gang und bei einem automatisierten Doppelkupplungsgetriebe gegebenenfalls zwei Gänge einzulegen.

Wird beispielsweise im Fahrzeugstillstand oder bei sehr geringer Fahrgeschwindigkeit durch entsprechende Sensoren das Hin- und Herschalten zwischen der Rückwärtsfahrstufe R und der Vorwärtsfahrstufe D erfasst, wodurch ein Freischaukeln des Kraftfahrzeugs z.B. im Schnee oder im Morast erkennbar ist, so können die entsprechenden Schaltvorgänge bei einem automatisierten Schaltgetriebe durch das Einlegen des Rückwärtsgangs R oder des ersten Gangs G1 und bei einem automatischen Doppelkupplungsgetriebe mit der üblichen Zuordnung des Rückwärtsgangs R und des ersten Gangs G1 zu verschiedenen Teilgetrieben durch das Einlegen beider Gänge (R, G1) deutlich beschleunigt werden, da zur Erzielung des Fahrzeugvortriebs mit dem Erreichen der jeweiligen Fahrstufenstellung (R oder D) durch den Wählhebel dann bei einem automatisierten Schaltgetriebe nur noch die eine Trennkupplung und bei einem automatischen Doppelkupplungsgetriebe (DKG) nur noch eine der beiden Trennkupplungen geschlossen werden muss.

Ebenso kann bei einem sensorischen Erkennen einer bevorstehenden, von dem Fahrer gewünschten sportlich-rasanten Anfahrt bei einem automatischen Doppelkupplungsgetriebe mit der üblichen Zuordnung des ersten Gangs G1 und des zweiten Gangs G2 zu verschiedenen Teilgetrieben der Anfahrvorgang durch das Einlegen beider Gänge (G1, G2) schon bei noch eingestellter Leerlauffahrstufe N ebenfalls deutlich beschleunigt werden, da dann mit dem Einschalten der Fahrstufe D zunächst nur die Trennkupplung des Anfahrgangs G1 geschlossen werden muss und anschließend der Kraftfluss durch eine überschnittene Betätigung beider Trennkupplungen schnell auf den zweiten Gang G2 umgeleitet werden kann.

Eine weitere Fahrsituation, in der das Einlegen eines Gangs bei eingestellter Leerlauffahrstufe N vorteilhaft erscheint, ist das so genannte Segeln bzw. der Schwungsnutzbetrieb, bei dem der Fahrer das Kraftfahrzeug auf eine bestimmte Fahrgeschwindigkeit beschleunigt und anschließend bei eingeschalteter Leerlauffahrstufe N oder zumindest geöffneter Fahrkupplung rollen lässt. In dieser Rollphase kann der Fahrer aber jederzeit, beispielsweise zur Durchführung eines Überholmanövers, in die Vorwärtsfahrstufe D zurückkehren bzw. die Fahrkupplung schließen, und über das Fahrpedal eine mehr oder weniger große Vortriebsleistung anfordern. Ist dann ein der aktuellen Fahrgeschwindigkeit entsprechender Gang schon eingelegt, so braucht nur noch bei einem automatisierten Schaltgetriebe die eine Trennkupplung und bei einem automatischen Doppelkupplungsgetriebe die Trennkupplung des betreffenden Teilgetriebes geschlossen zu werden, wodurch ein sehr schnelles Ansprechverhalten gewährleistet ist. Um aber bei eingestellter Leerlauffahrstufe N einen Gang einlegen zu können, muss unter allen Umständen sichergestellt sein, dass die betreffende Trennkupplung beim Auftreten einer Störung in der elektronischen Getriebesteuerung (EGS) oder an einer Komponente der hydraulischen Steuerungsvorrichtung nicht versehentlich geschlossen wird.

Vor diesem Hintergrund liegt der vorliegenden Erfindung die Aufgabe zugrunde, eine hydraulische Steuerungsvorrichtung eines automatisierten Stufenschaltgetriebes der eingangs genannten Art vorzuschlagen, die bei möglichst einfachem und kostengünstigem Aufbau sowie ohne eine Funktionseinschränkung im Hinblick auf die Ermöglichung eines sicheren Gangeinlegens im Leerlauf weitergebildet ist.

Dokumente DE102004033362 und DE10210612 zeigen eine druckmittelbetätigbare Steuerungsvorrichtung nach dem Oberbegriff des Anspruchs 1.

Die Erfindung geht daher gemäß den Merkmalen des Hauptanspruchs aus von einer druckmittelbetätigbaren, also hydraulisch oder pneumatisch betätigbaren Steuerungsvorrichtung eines automatisierten Stufenschaltgetriebes (automatisiertes Schaltgetriebe oder automatisches Doppelkupplungsgetriebe), mit einem ansteuerbaren Kupplungsregelventil zur Steuerung eines Kupplungsstellzylinders einer im Kraftfluss zwischen einem Antriebsmotor und einer Eingangswelle des Stufenschaltgetriebes angeordneten aktiv schließbaren Trennkupplung, und mit einem im Druckversorgungszweig des Kupplungsregelventils angeordneten Selbsthalteventil zur drehzahlabhängigen Notbetätigung der Trennkupplung. Zur Lösung der gestellten Aufgabe ist außerdem ein elektrisch ansteuerbarer Abschaltaktuator vorgesehen, der derart ausgebildet und mit dem Selbsthalteventil in Wirkverbindung ist, dass der Ventilkolben des Selbsthalteventils im bestromten Zustand des Abschaltaktuators in eine die Druckversorgung des Kupplungsregelventils absperrende Ruhestellung und im stromlosen Zustand des Abschaltaktuators in eine durch die einwirkenden Steuerdrücke bestimmte Betriebsstellung bringbar ist.

Durch ein Bestromen des relativ einfach und kostengünstig gestaltbaren Abschaltaktuators wird im Normalbetrieb der hydraulischen Steuerungsvorrichtung der Ventilkolben des Selbsthalteventils in seine Ruhestellung umgeschoben und damit ein durch das Selbsthalteventil zu dem Kupplungsregelventil leitbarer Versorgungsdruck P_V1 oder ein durch das Selbsthalteventil leitbarer Steuerdruck, durch den die Weiterleitung des Versorgungsdruckes P_V1 über ein anderes Steuerungsventil steuerbar ist, abgesperrt, und die entsprechende Verbindungsleitung drucklos geschaltet. Durch den Wegfall des Versorgungsdruckes P_V1 in dem betreffenden Kupplungsstellzylinder wird die zugeordnete Trennkupplung zwangsläufig geöffnet oder, sofern diese sich schon im geöffneten Zustand befindet, sicher geöffnet gehalten. In dieser Betriebssituation können bei eingeschalteter Leerlauffahrstufe N, insbesondere zur Beschleunigung bevorstehender Schaltvorgänge, bei einem automatisierten Schaltgetriebe ein Gang und bei einem automatisierten Doppelkupplungsgetriebe bis zu zwei Gänge eingelegt werden, ohne dass dadurch bei Auftreten einer Störung in der hydraulischen Steuerungsvorrichtung oder in der zugeordneten elektronischen Getriebesteuerung (EGS) eine Trennkupplung unabsichtlich geschlossen werden könnte.

Zur Beendigung dieser Betriebssituation wird der Abschaltaktuator wieder stromlos geschaltet, wodurch der Ventilkolben des Selbsthalteventils unter der Einwirkung von verfügbaren Steuerdrücken, insbesondere eines im Normalbetrieb verfügbaren Steuerdruckes P_Nor, wieder in die vor dem Einschalten des Abschaltaktuators eingenommene Betriebsstellung zurückkehrt, und somit das Selbsthalteventil in seinen zuvor durch den Abschaltaktuator übersteuerten Betriebszustand übergeht.

Befindet sich die hydraulische Steuerungsvorrichtung jedoch schon im Notbetrieb, in dem alle elektrisch steuerbaren Steuerungselemente der hydraulischen Steuerungsvorrichtung stromlos geschaltet sind, so kann auch der Abschaltaktuator nicht mehr aktiviert werden. Daraus ergibt sich, dass im Notbetrieb die entsprechenden Funktionalitäten, wie das Einlegen eines Gangs bei eingestellter Leerlauffahrstufe N, nicht mehr zur Verfügung stehen.

Der Abschaltaktuator wird als ein hydraulisches Magnetschaltventil, z.B. als ein 3/2-Wege-Schaltventil, mit einem Anschluss einer einen Reduzierdruck P_Red führenden Steuerdruck-Versorgungsleitung, mit einem Anschluss einer mit einem die Ventilfeder enthaltenden stirnseitigen Druckraum des Selbsthalteventils verbundenen Schaltdruckleitung, und mit einem Anschluss einer Drucklosleitung ausgebildet, durch das die Schaltdruckleitung im stromlosen Zustand mit der Drucklosleitung und im bestromten Zustand mit der Steuerdruck-Versorgungsleitung verbunden ist. Es versteht sich von selbst, dass in diesem Fall der über das Magnetschaltventil durchschaltbare Abschaltdruck P_Abs, der weitgehend dem Reduzierdruck P_Red entspricht, größer ist als der maximal erforderliche Schaltdruck des Selbsthalteventils, bzw. dass der durchschaltbare Abschaltdruck P_Abs des Magnetschaltventils sowie die Federsteifigkeit der Ventilfeder und die druckbeaufschlagten Wirkflächen des Ventilkolbens des Selbsthalteventils derart bemessen sind, dass die zusammen mit dem Abschaltdruck P_Abs im schließenden Sinn auf den Ventilkolben einwirkenden Druck- und Federkräfte in jedem Fall größer sind als die maximal im öffnenden Sinn auf den Ventilkolben einwirkenden Druckkräfte.

Bei der Ausbildung des Abschaltaktuators als Magnetregelventil kann vorteilhaft mindestens eine weitere, zu einem anderen hydraulisch steuerbaren Schaltsteuerungselement führende Schaltdruckleitung an die Schaltdruckleitung oder unmittelbar an den Anschluss der Schaltdruckleitung des Magnetregelventils angeschlossen sein, wobei die Schaltdrücke des Selbsthalteventils und des anderen Schaltsteuerungselementes zweckmäßig unterschiedlich hoch sind.

Hierdurch ergeben sich für den Abschaltaktuator bzw.. das Magnetregelventil drei Steuerungszustände; einen ersten Steuerungszustand, in dem beide Schaltsteuerungselemente nicht umgeschaltet sind, einen zweiten Steuerungszustand, in dem nur eines der beiden Schaltsteuerungselemente umgeschaltet ist, und einen dritten Steuerungszustand, in dem beide Schaltsteuerungselemente umgeschaltet sind.

Zur Erzielung eines relativ einfachen und effektiven Aufbaus ist das Selbsthalteventil versehen mit einem mittigen Druckraum, der federseitig einen steuerbaren Anschluss einer einen Versorgungsdruck P_V1 führenden Versorgungsleitung aufweist, der mittig einen Anschluss einer zu dem Versorgungsanschluss des Kupplungsregelventils führenden Verbindungsleitung aufweist, und der federabgewandt einen steuerbaren Anschluss einer Drucklosleitung hat, sowie mit einem weiteren mittigen Druckraum, der einen Anschluss einer im Normalbetrieb einen Steuerdruck P_Nor führenden Steuerdruckleitung aufweist, und der federseitig durch eine größere Wirkfläche eines benachbarten Kolbenbundes begrenzt ist als auf der federabgewandten Seite, und mit einem die Ventilfeder enthaltenden stirnseitigen Druckraum, der einen Anschluss der zu dem Abschaltaktuator führenden Schaltdruckleitung aufweist, sowie mit einem der Ventilfeder abgewandten stirnseitigen Druckraum, der einen verschließbaren Anschluss einer einen drehzahlabhängigen Steuerdruck P_D führenden Steuerdruckleitung aufweist.

Durch die hierbei vorgesehene unmittelbare Durchleitung des Versorgungsdruckes P_V1 durch das Selbsthalteventil kann vorteilhaft ein in der Steuerungsvorrichtung gemäß der DE 10 2004 020 569 A1 vorgesehenes Aktivierungsventil eingespart werden. Die zuvor schon beschriebene Rückstellfunktion des Ventilkolbens über den Steuerdruck P_Nor nach dem Abschalten des Abschaltaktuators wird hierbei durch die unterschiedliche Größe der den betreffenden Druckraum begrenzenden Wirkflächen der benachbarten Kolbenbunde bewerkstelligt. Die Steuerung, also die Öffnung und Absperrung des jeweiligen Anschlusses, erfolgt dabei in an sich bekannter Weise jeweils über eine Steuerkante eines federseitig oder federabgewandt benachbarten Kolbenbundes des Ventilkolbens.

Zur Erhöhung der Funktionssicherheit der Abschaltfunktion des Abschaltaktuators kann das Selbsthalteventil zusätzlich mit einem weiteren mittigen Druckraum versehen sein, über den eine den Reduzierdruck P_Red führende Steuerdruck-Versorgungsleitung mit einer zu einem der Ventilfeder abgewandten stirnseitigen Druckraum des Kupplungsregelventils führenden und mit einem Absperrelement versehenen Steuerdruck-Verbindungsleitung verbindbar ist, wobei der Druckraum federseitig einen steuerbaren Anschluss der Steuerdruck-Versorgungsteitung aufweist, mittig einen Anschluss der Steuerdruck-Verbindungsleitung aufweist, und federabgewandt einen steuerbaren Anschluss einer Drucklosleitung hat.

Hiermit wird unter Inkaufnahme eines entsprechend höheren Bauaufwandes für das Selbsthalteventil im bestromten Zustand des Abschaltaktuators neben dem Versorgungsdruck P_V1 auch der Reduzierdruck P_Red, der im Notbetrieb als Notsteuerdruck P_Not über das Absperrelement und die Steuerdruck-Verbindungsleitung zu dem stirnseitigen Druckraum des Kupplungsregelventils geleitet wird, ebenfalls abgesperrt.

Alternativ zu den zuvor beschriebenen beiden Ausführungen eines einzigen Selbsthalteventils können auch gemäß einer nicht erfindungsgemäßen Ausführungsform zwei druckgesteuerte Selbsthalte ventile vorgesehen serin, von denen das erste Selbsthalteventil versehen ist mit einem mittigen Druckraum, der federseitig einen steuerbaren Anschluss einer den Versorgungsdruck P_V1 führenden Versorgungsleitung aufweist, der mittig einen Anschluss einer zu dem Versorgungsanschluss des Kupplungsregelventils führenden Versorgungsdruck-Verbindungsleitung aufweist, und der federabgewandt einen steuerbaren Anschluss einer Drucklosleitung hat, wobei der Druckraum federseitig durch eine größere Wirkfläche eines benachbarten Kolbenbundes begrenzt ist als auf der federabgewandten Seite, sowie mit einem die Ventilfeder enthaltenden stirnseitigen Druckraum, der einen Anschluss der zu dem Abschaltaktuator führenden Schaltdruckleitung aufweist, und mit einem der Ventilfeder abgewandten stirnseitigen Druckraum, der einen durch die Steuerkante eines federseitig benachbarten Kolbenbundes steuerbaren Anschluss einer im Normalbetrieb einen Steuerdruck P_Nor führenden Steuerdruckleitung aufweist.

Das zweite Selbsthalteventil ist versehen mit einem mittigen Druckraum; über den eine den Reduzierdruck P_Red führende Steuerdruck-Versorgungsleitung mit einer zu einem der Ventilfeder abgewandten stirnseitigen Druckraum des Kupplungsregelventils führenden und mit einem Absperrelement versehenen Steuerdruck-Verbindungsleitung verbindbar ist, wobei dieser Druckraum federseitig einen steuerbaren Anschluss der Steuerdruck-Versorgungsleitung aufweist, mittig einen Anschluss der Steuerdruck-Verbindungsleitung hat, und federabgewandt einen steuerbaren Anschluss einer Drucklosleitung aufweist, sowie mit einem von der Ventilfeder abgewandten stirnseitigen Druckraum, der einen steuerbaren Anschluss einer einen drehzahlabhängigen Steuerdruck P_D führenden Steuerdruckleitung aufweiset.

Bei dieser Variante sind beide Selbsthalteventile relativ einfach und Platz sparend ausgeführt. Das erste Selbsthalteventil dient zur Durchleitung und Absperrung des Versorgungsdruckes P_V1, wobei der betreffende Ventilkolben über den im Normalbetrieb verfügbaren Steuerdruck P_Nor in eine Betriebsstellung mit geöffneter Durchleitung des Versorgungsdruckes P_V1 umgeschoben ist und im Störungsfall, also beim Wegfall des Steuerdruckes P_Nor, von dem Versorgungsdruck P_V1 über die unterschiedlich großen Wirkflächen der benachbarten Kolbenbunde in der aktuellen Betriebsstellung gehalten wird.

Bedarfsweise ist der Ventilkolben jedoch durch die Bestromung des Abschaltaktuators mittels des dann in der Schaltdruckleitung wirksamen, weitgehend dem Reduzierdruck P_Red entsprechenden Abschaltdruckes P_Abs in seine Ruhestellung mit abgesperrter Durchleitung des Versorgungsdruckes P_V1 verschiebbar.

Das zweite Selbsthalteventil dient zur Durchleitung des Reduzierdrucks P_Red zu dem Absperrelement und von dort im Notlauf als Notsteuerdruck P_Not weiter zu dem stirnseitigen Druckraum des Kupplungsregelventils. Im Störungsfall, also beim Wegfall des Steuerdruckes P_Nor, wird die entsprechende Verbindung durch die stirnseitige Beaufschlagung des Ventilkolbens mit dem drehzahlabhängigen Druck P_D nur bei hinreichend großer Drehzahl des Antriebsmotors oder der Ausgangswelle des Stufenschaltgetriebes geöffnet gehalten und bei zu niedriger Drehzahl abgesperrt. Somit erfüllen beide Selbsthalteventile zusammen in etwa denselben Funktionsumfang wie die zuvor beschriebenen Ausführungsformen eines einzigen, deutlich komplizierter aufgebauten und teureren Selbsthalteventils.

Das im Notbetrieb zur Weiterleitung des Reduzierdruckes P_Red bzw. des Notsteuerdruckes P_Not zu dem Kupplungsregelventil vorgesehene Absperrelement ist bevorzugt als ein druckgesteuertes Notlaufventil ausgebildet, das versehen ist mit einem mittigen Druckraum, der federseitig einen steuerbaren Anschluss einer Drucklosleitung aufweist, der mittig einen Anschluss der zu dem Kupplungsregelventil führenden Steuerdruck-Verbindungsleitung aufweist, und der federabgewandt einen steuerbaren Anschluss der von der Steuerdruck-Versorgungsleitung oder dem Selbsthalteventil kommenden Steuerdruckleitung aufweist, sowie mit einem von der Ventilfeder abgewandten stirnseitigen Druckraum, der durch eine Wirkfläche eines federseitigen Kolbenbundes begrenzt ist und einen Anschluss einer im Normalbetrieb einen Steuerdruck P_Nor führenden Steuerdruckleitung aufweist.

Durch dieses Notlaufventil wird bewirkt, dass der Ventilkolben des Notlaufventils im Normalbetrieb durch die Beaufschlagung mit dem Steuerdruck P_Nor in eine Betriebsstellung umgeschoben ist, in der die Durchleitung des Reduzierdruckes P_Red zu dem Kupplungsregelventil abgesperrt ist, und dass der Ventilkolben im Notbetrieb, also bei Wegfall des Steuerdruckes P_Nor, durch die Rückstellkraft der Ventilfeder in seine Ruhestellung geschoben wird, in der die Durchleitung des Reduzierdruckes P_Red als Notsteuerdruck P_Not zu dem Kupplungsregelventil geöffnet ist. Somit wird über die Drucklosschaltung des stirnseitigen Druckraums des Notlaufventils und die dadurch bedingte Durchschaltung des damit zum Notsteuerdruck P_Not werdenden Reduzierdruckes P_Red zu dem Kupplungsregelventil dessen Notbetrieb aktiviert.

Für die Auslösung des Notbetriebs ist zweckmäßig ein elektrisch steuerbarer Betriebsschaltaktuator vorgesehen, durch den die im Normalbetrieb den Steuerdruck P_Nor führende, zu dem Selbsthalteventil und/oder zu dem Notlaufventil führende Steuerleitung im bestromten Zustand des Betriebsschaltaktuators mit dem Steuerdruck P_Nor versorgbar und im stromlosen Zustand des Betriebsschaltaktuators drucklos schaltbar ist.

Der Betriebsschaltaktuator kann als ein hydraulisches Magnetschaltventil, z.B. als ein 3/2-Wege-Schaltventil, mit einem Anschluss der Steuerdruck-Versorgungsleitung, mit einem Anschluss einer mit der im Normalbetrieb den Steuerdruck P_Nor führenden Steuerdruckleitung des Selbsthalteventils und/oder des Notlaufventils, und mit einem Anschluss einer Drucklosleitung ausgebildet sein, durch das die Steuerdruckleitung im stromlosen Zustand mit der Drucklosleitung und im bestromten Zustand mit der Steuerdruck-Versorgungsleitung verbunden ist. Der im Normalbetrieb verfügbare Steuerdruck P_Nor entspricht somit weitgehend dem in der Steuerdruck-Versorgungsleitung verfügbaren Reduzierdruck P_Red.

Ebenso kann der Betriebsschaltaktuator auch als ein hydraulisches Magnetregelventil, z.B. als ein 3/2-Wege-Regelventil oder als ein 3/3-Wege-Regelventil, mit einem Anschluss der Steuerdruck-Versorgungsleitung, mit einem Anschluss einer mit der im Normalbetrieb den Steuerdruck P_Nor führenden Steuerdruckleitung des Selbsthalteventils und/oder des Notlaufventils, und mit einem Anschluss einer Drucklosleitung ausgebildet sein, durch das die Steuerdruckleitung im stromlosen Zustand mit der Drucklosleitung und im bestromten Zustand mit der Steuerdruck-Versorgungsleitung verbindbar ist. Hierbei können das Selbsthalteventil und das Notlaufventil, sofern diese unterschiedliche Schaltdrücke aufweisen, seriell durch das Magnetregelventil umgeschaltet werden.

Prinzipiell können bei einem Doppelkupplungsgetriebe mit zwei Trennkupplungen zur Steuerung der beiden Kupplungsstellzylinder bei separater Ausführung der Steuerungszweige jeweils die bislang beschriebenen Ausführungen und Steuerungselemente der erfindungsgemäßen Steuerungsvorrichtung in doppelter Ausführung verwendet werden. Da der Aufwand an Steuerungselementen hierbei aber ungünstig hoch ist, stellt sich in diesem Fall eine mittels eines Kupplungswahlventils realisierbare kombinierte Steuerung beider Kupplungsstellzylinder vorteilhafter dar.

Hierzu ist bevorzugt ein druckgesteuertes Kupplungswahlventil vorgesehen, dessen Ventilkolben federzentriert ist und in entgegengesetzter Wirkrichtung mit den über Anschlussleitungen von den beiden Kupplungsstellzylindern zugeführten Arbeitsdrücken beaufschlagt wird, und das zwei Druckräume aufweist, die jeweils axial außen einen steuerbaren Anschluss der im Notbetrieb den Notsteuerdruck P_Not führenden Steuerdruck-Verbindungsleitung aufweisen, axial innen einen steuerbaren Anschluss einer Drucklosleitung aufweisen, und dazwischen einen über jeweils eine Steuerdruck-Verbindungsleitung zu dem der Ventilfeder abgewandten stirnseitigen Druckraum eines der beiden Kupplungsregelventile führende Anschluss aufweisen, wobei die Anschlüsse der Steuerdruck-Verbindungsleitungen axial jeweils auf der durch die Wirkrichtung der zugeordneten Arbeitsdrücke bestimmten Seite angeordnet sind.

Durch das derart ausgebildete Kupplungswahlventil wird sichergestellt, dass der im Störungsfall verfügbare, von dem Notlaufventil als Notsteuerdruck P_Not durchgeleitete Reduzierdruck P_Red nur zu dem Kupplungsregelventil der zum Zeitpunkt der Störung weiterhin geschlossenen Trennkupplung geleitet wird, wodurch diese Trennkupplung geschlossen wird oder bleibt, und die andere Trennkupplung geöffnet wird. Hierdurch ist vorteilhaft sichergestellt, dass nicht beide Trennkupplungen gleichzeitig geschlossen werden können, wodurch das Kraftfahrzeug bei in beiden Teilgetrieben eingelegten Gängen blockiert würde. Da hierdurch zumindest das Selbsthalteventil, das Notlaufventil und die zugeordneten Versorgungs- und Steuerdruckleitungen nur noch in einfacher Ausführung erforderlich sind, ergibt sich bei dieser Ausführungsform der erfindungsgemäßen Steuerungsvorrichtung ein deutlicher Kosten- und Bauraumvorteil.

Zur Verdeutlichung der Erfindung ist der Beschreibung eine Zeichnung mit Ausführungsbeispielen beigefügt. In diesen zeigt
- Fig. 1: eine Ausführungsform einer erfindungsgemäßen Steuerungsvorrichtung zur Steuerung einer einzigen Trennkupplung im Antriebsstrang,
- Fig. 2: eine gegenüber der Ausführungsform gemäß Fig. 1 leicht modifizierte Steuerungsvorrichtung zur Steuerung der einzigen Trennkupplung,
- Fig. 3: eine Ausführungsvarinate einer erfindungsgemäßen Steuerungsvorrichtung zur kombinierten Steuerung von zwei Trennkupplungen, und
- Fig. 4: eine weitere nicht erfindungsgemäße, zu der Variante gemäß Fig. 3 alternative Steuerungsvorrichtung zur kombinierten Steuerung von zwei Trennkupplungen.

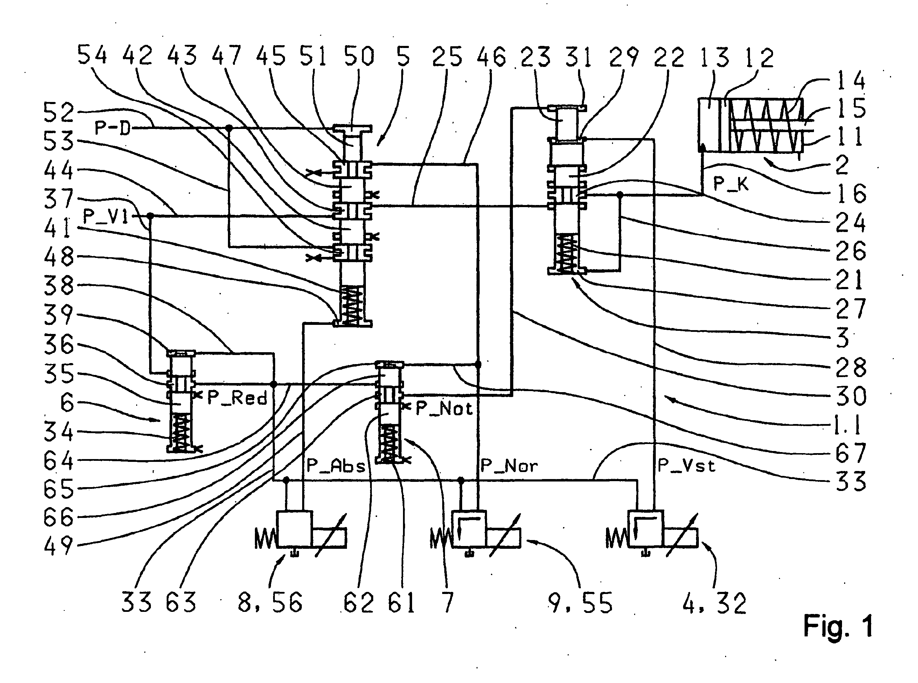

Eine erfindungsgemäße hydraulische Steuerungsvorrichtung 1.1 eines automatisierten Stufenschaltgetriebes weist in einem in Fig. 1 abgebildeten kupplungsseitigen Teil einen Kupplungsstellzylinder 2, ein Kupplungsregelventil 3, ein Vorsteuerventil 4, ein Selbsthalteventil 5, ein Druckminderventil 6, ein Notlaufventil 7, einen Abschaltaktuator 8 und einen Betriebsschaltaktuator 9 auf.

Der Kupplungsstellzylinder 2 umfasst einen Zylinderkörper 11 und einen darin axialbeweglich gelagerten Kolben 12, der einseitig einen mit einem Arbeitsdruck P_K beaufschlagbaren Druckraum 13 begrenzt, gegenüberliegend von einer Rückstellfeder 14 mit einer Rückstellkraft beaufschlagt wird, und über eine Kolbenstange 15 mit einer hier nicht abgebildeten aktiv schließbaren Trennkupplung in Wirkverbindung steht. Durch die Zufuhr eines Druckmittels mit einem hinreichend hohen Arbeitsdruck P_K über eine mit dem Kupplungsregelventil 3 verbundene Arbeitsdruckleitung 16 in den Druckraum 13 des Kupplungsstellzylinders 2 wird die zugeordnete Trennkupplung geschlossen und durch eine Drucklosschaltung des Druckraums 13 geöffnet. Mit der Einstellung eines mittleren Arbeitsdruckes P_K in dem Druckraum 13 kann die Trennkupplung zudem in einem Schlupfzustand gehalten werden.

Das Kupplungsregelventil 3 ist hydraulisch steuerbar ausgebildet und weist einen einseitig durch eine Ventilfeder 21 belastbaren Ventilkolben 22 sowie einen auf der federabgewandten Stirnseite angeordneten, schwimmend gelagerten Zusatzkolben 23 auf. Ein mittlerer Druckraum 24 des Kupplungsregelventils 3 ist federseitig mit einem steuerbaren, d.h. durch die Steuerkante eines benachbarten Kolbenbundes des Ventilkolbens 22 drosselbaren Anschluss einer im Normalbetrieb einen Versorgungsdruck P_V1 führenden Versorgungsdruck-Verbindungsleitung 25 verbunden, mittig mit einem Anschluss für eine zu dem Druckraum 13 des Kupplungsstellzylinders 2 führenden Arbeitsdruckleitung 16 versehen, und federabgewandt mit einem steuerbaren Anschluss einer hier nicht näher dargestellten, zu einem Ölsumpf führenden Drucklosleitung ausgestattet.

Durch eine Rückführung des Arbeitsdruckes P_K über eine an die Arbeitsdruckleitung 16 angeschlossene Rückführungsleitung 26 in einen die Ventilfeder 21 enthaltenden stirnseitigen Druckraum 27 werden die Regelfunktion des Kupplungsregelventils 3 und die Dämpfung von Schwingungen des Ventilkolbens 22 bewirkt.

Durch den Anschluss einer mit dem Vorsteuerventil 4 verbundenen, im Normalbetrieb einen Vorsteuerdruck P_Vst führenden Steuerdruckleitung 28 an einen die federabgewandte Stirnseite des Ventilkolbens 22 aufnehmenden Druckraum 29 wird der Ventilkolben 22 zur Einstellung eines proportionalen Arbeitsdruckes P_K von dem Vorsteuerdruck P_Vst beaufschlagt.

Durch den Anschluss einer mit dem Notlaufventil 7 verbundenen, im Notbetrieb einen Notsteuerdruck P_Not führenden Steuerdruck-Verbindungsleitung 30 an einen die federabgewandte Stirnseite des Zusatzkolbens 23 aufnehmenden Druckraum 31 wird der Ventilkolben 22 zudem im Notbetrieb über den Zusatzkolben 23 im öffnenden Sinn mit einer Steuerkraft zur Notbetätigung des Kupplungsstellzylinders 2 bzw. der zugeordneten Trennkupplung beaufschlagt.

Das Vorsteuerventil 4 ist als ein 3/2-Wege- oder als ein 3/3-Wege-Magnetregelventil 32 mit einem Anschluss einer einen Reduzierdruck P_Red führenden Steuerdruck-Versorgungsleitung 33, einen Anschluss der zu dem Kupplungsregelventil 3 führenden Steuerdruckleitung 28, und einen Anschluss einer nicht näher dargestellten Drucklosleitung ausgebildet. Der mittels eines elektrischen Steuerstroms über das Vorsteuerventil 4 eingestellte Vorsteuerdruck P_Vst wird in dem Kupplungsregelventil 3 proportional in den Arbeitsdruck P_K zur Betätigung der betreffenden Trennkupplung über den Kupplungsstellzylinder 2 umgesetzt. Bei Auftreten einer Störung, insbesondere in einer zugeordneten elektronischen Getriebesteuerung (EGS), wird das Vorsteuerventil 4 abgeschaltet, also stromlos geschaltet, und damit die Steuerdruckleitung 28 durch eine Verbindung mit der Drucklosleitung drucklos geschaltet.

Der in der Steuerdruck-Versorgungsleitung 33 verfügbare Reduzierdruck P_Red ist im Wesentlichen für Steuerungszwecke vorgesehen und weist hierzu eine hohe Konstanz auf. Der Reduzierdruck P_Red wird mittels des Druckminderventils 6 eingestellt, welches hydraulisch steuerbar ausgebildet ist und einen einseitig durch eine Ventilfeder 34 belastbaren Ventilkolben 35 aufweist. Ein mittiger Druckraum 36 des Druckminderventils 6 ist federseitig mit einem steuerbaren Anschluss einer nicht näher dargestellten Drucklosleitung, mittig mit einem Anschluss der Steuerdruck-Versorgungsleitung 33, und federabgewandt einen steuerbaren Anschluss einer den Versorgungsdruck P_V1 führenden Verbindungsleitung 37 versehen. Durch die Rückführung des Reduzierdruckes P_Red über eine an die Steuerdruck-Versorgungsleitung 33 angeschlossene Rückführungsleitung 38 in einen der Ventilfeder 34 abgewandten stirnseitigen Druckraum 39 werden die Regelfunktion des Druckminderventils 6 und die Dämpfung von Schwingungen des Ventilkolbens 35 bewirkt.

Das Selbsthalteventil 5 ist hydraulisch steuerbar ausgebildet und weist einen einseitig durch eine Ventilfeder 41 belastbaren Ventilkolben 42 auf. Ein mittiger Druckraum 43 des Selbsthalteventils 5 ist federseitig mit einem steuerbaren Anschluss einer den Versorgungsdruck P_V1 führenden Versorgungsleitung 44, mittig mit einem Anschluss der zu dem Kupplungsregelventil 3 führenden Versorgungsdruck-Verbindungsleitung 25, und federabgewandt mit einem steuerbaren Anschluss einer nicht näher dargestellten Drucklosleitung versehen. Ein weiterer mittiger Druckraum 45 ist mit einem Anschluss einer mit dem Betriebsschaltaktuator 9 verbundenen sowie im Normalbetrieb einen Steuerdruck P_Nor führenden Steuerdruckleitung 46 versehen, und federseitig durch eine größere Wirkfläche eines benachbarten Kolbenbundes 47 begrenzt als auf der federabgewandten Seite. Ein die Ventilfeder 41 enthaltender stirnseitiger Druckraum 48 weist einen Anschluss einer zu dem Abschaltaktuator 8 führenden Schaltdruckleitung 49 auf.

Ein von der Ventilfeder 41 abgewandter stirnseitiger Druckraum 50 ist mit einem durch eine Steuerkante eines federseitig benachbarten Kolbenbundes 51 verschließbaren Anschluss einer einen drehzahlabhängigen Steuerdruck P_D führenden Steuerdruckleitung 52 versehen. Eine von der Steuerdruckleitung 52 abzweigende Verbindungsleitung 53 führt zu einem weiteren mittigen Druckraum 54 des Selbsthalteventils 5, der federabgewandt mit einem steuerbaren Anschluss einer nicht näher dargestellten Drucklosleitung versehen ist sowie zur Abführung des drehzahlabhängigen Druckes P_D bei abgesperrtem Anschluss des stirnseitigen Druckraums 50 dient.

Im Normalbetrieb führt die Steuerdruckleitung 46 durch die Aktivierung des Betriebsschaltaktuators 9 den weitgehend dem Reduzierdruck P_Red entsprechenden Steuerdruck P_Nor. Hierzu ist der Betriebsschaltaktuator 9 vorliegend als ein hydraulisches Magnetregelventil 55, beispielsweise als ein 3/2-Wege-Regelventil, mit einem Anschluss der Steuerdruck-Versorgungsleitung 33, mit einem Anschluss der zu dem Selbsthalteventil 5 führenden Steuerdruckleitung 46, und mit einem Anschluss einer nicht näher bezeichneten Drucklosleitung ausgebildet, mittels dem die Steuerdruckleitung 46 im stromlosen Zustand mit der Drucklosleitung und im bestromten Zustand mit der Steuerdruck-Versorgungsleitung 33 verbindbar ist.

Durch den Steuerdruck P_Nor wird der Ventilkolben 42 des Selbsthalteventils 5 aufgrund der größeren Wirkfläche des federseitigen Kolbenbundes 47 entgegen der Rückstellkraft der Ventilfeder 41 in eine Betriebsstellung umgeschoben, in der die Verbindung der Versorgungsleitung 44 mit der Versorgungsdruck-Verbindungsleitung 25 geöffnet ist, und somit der Versorgungsdruck P_V1 an dem Kupplungsregelventil 3 zur Einstellung des Arbeitsdruckes P_K zur Verfügung steht.

Tritt nun eine Störung auf, die zur Abschaltung des Betriebsschaltaktuators 9 und demzufolge zum Wegfall des Steuerdruckes P_Nor führt, so wird der Ventilkolben 42 über den auf der federabgewandten Seite auf den dortigen stirnseitigen Kolbenbund 51 wirksamen drehzahlabhängigen Steuerdruck P_D solange in seiner Betriebsstellung gehalten, wie die zu Grunde liegende Drehzahl hinreichend hoch ist. Sinkt die betreffende Drehzahl und damit der drehzahlabhängige Steuerdruck P_D jedoch unter einen vorab festgelegten Grenzwert, so wird der Ventilkolben 42 von der Rückstellfeder 41 in seine Ruhestellung verschoben, in der die Verbindung der Versorgungsleitung 44 mit der Versorgungsdruck-Verbindungsleitung 25 geschlossen sowie die Versorgungsdruck-Verbindungsleitung 25 drucklos geschaltet ist, und somit der Versorgungsdruck P_V1 an dem Kupplungsregelventil 3 nicht mehr zur Verfügung steht.

Der drehzahlabhängige Steuerdruck P_D verhält sich üblicherweise proportional zur Drehzahl des Antriebsmotors oder zu der Drehzahl der Ausgangswelle des Stufenschaltgetriebes, so dass eine Weiterfahrt im Notbetrieb bei ausreichend hoher Motordrehzahl oder bei ausreichend hoher Fahrgeschwindigkeit möglich ist. Bei zu niedriger Motordrehzahl oder zu niedriger Fahrgeschwindigkeit wird jedoch das Öffnen der Trennkupplung durch das Abschalten des Versorgungsdruckes P_V1 erzwungen, wodurch ein Abwürgen des Antriebsmotors verhindert und ein durch den Fahrer zumindest noch begrenzt beeinflussbares Ausrollen des Kraftfahrzeugs ermöglicht wird.

Durch die Beaufschlagung des federseitigen Druckraumes 48 des Selbsthalteventils 5 mit einem durch die Schaltdruckleitung 49 zuführbaren Abschaltdruck P_Abs kann der Ventilkolben 42 jedoch durch eine Betätigung eines Abschaltaktuators 8 unabhängig von dem momentanen Betriebszustand des Selbsthalteventils 5 sicher in seinen Ruhezustand mit einer dann entlasteten Feder 41 gebracht und dort gehalten werden.

Hierzu ist der Abschaltaktuator 8 vorliegend als ein hydraulisches Magnetschaltventil 56, beispielsweise als ein 3/2-Wege-Schaltventil, mit einem Anschluss der Steuerdruck-Versorgungsleitung 33, mit einem Anschluss der mit dem federseitigen stirnseitigen Druckraum 48 des Selbsthalteventils 5 verbundenen Schaltdruckleitung 49 und mit einem Anschluss einer nicht näher bezeichneten Drucklosleitung ausgebildet, durch das die Schaltdruckleitung 49 im stromlosen Zustand mit der Drucklosleitung und im bestromten Zustand mit der Steuerdruck-Versorgungsleitung 33 verbunden ist.

Durch die Aktivierung des Abschaltaktuators 8 wird somit die zugeordnete Trennkupplung durch das Absperren der Versorgungsleitung 44 und das Drucklosschalten der Versorgungsdruck-Verbindungsleitung 25 mittels des Ventilkolbens 41 des Selbsthalteventils 5 zuverlässig geöffnet oder, falls diese sich schon im geöffneten Zustand befindet, geöffnet gehalten. In diesem Betriebszustand ist z.B. das Einlegen eines Gangs bei eingestellter Leerlauffahrstufe N möglich, wodurch der Ablauf eines bevorstehenden Schaltvorgangs wesentlich beschleunigt werden kann.

Tritt in dieser Betriebsphase eine Störung auf, die zum Abschalten des Abschaltaktuators 8 führt, so kann der Ventilkolben 42 des Selbsthalteventils 5 nicht in seine Betriebsstellung zurückkehren, da einerseits der Steuerdruck P_Nor aufgrund des ebenfalls abgeschalteten Betriebsschaltaktuators 9 nicht zur Verfügung steht und andererseits der drehzahlabhängige Steuerdruck P_D aufgrund der absperrenden Ausgestaltung des betreffenden Anschlusses und des federabgewandten stirnseitigen Kolbenbundes 51 nicht mehr in den stirnseitigen Druckraum 50 gelangen kann. Die betreffende Trennkupplung bleibt somit bei einer während eines aktivierten Abschaltventils eintretenden Störung nachfolgend sicher geöffnet.

Ist bereits eine Störung eingetreten, in der sich die Steuerungsvorrichtung 1.1 bereits im Notbetrieb befindet, so kann der Abschaltaktuator 8 nicht mehr betätigt werden. Somit steht dann die zuvor beschriebene Möglichkeit eines Gangeinlegens bei eingestellter Leerlauffahrstufe N nicht mehr zur Verfügung.

Für die Aktivierung des Notbetriebs sind das Notlaufventil 7 und der Betriebsschaltaktuator 9 vorgesehen. Das Notlaufventil 7 ist druckgesteuert ausgebildet und weist einen einseitig durch eine Ventilfeder 61 belastbaren Ventilkolben 62 auf. Ein mittiger Druckraum 63 weist federseitig einen steuerbaren Anschluss einer nicht näher dargestellten Drucklosleitung, mittig einen Anschluss für die zu dem die federabgewandte Stirnseite des Zusatzkolbens 23 aufnehmenden Druckraum 31 des Kupplungsregelventils 3 führenden Steuerdruck-Verbindungsleitung 30, sowie federabgewandt einen steuerbaren Anschluss einer von der Steuerdruck-Versorgungsleitung 33 abzweigenden Steuerdruck-Versorgungsleitung 64 auf. Ein von der Ventilfeder 61 abgewandter stirnseitiger Druckraum 65 wird durch eine Wirkfläche eines federseitig benachbarten Kolbenbundes 66 des Ventilkolbens 62 begrenzt und weist einen Anschluss einer von der Steuerdruckleitung 46 abzweigenden Steuerdruckleitung 67 auf.

Im Normalbetrieb führt die Steuerdruckleitung 46 und damit auch die Steuerdruckleitung 67 den weitgehend dem Reduzierdruck P_Red entsprechenden Steuerdruck P_Nor. Durch den Steuerdruck P_Nor wird der Ventilkolben 62 des Notlaufventils 6 entgegen der Rückstellkraft der Ventilfeder 61 in eine Betriebsstellung umgeschoben, in der die Verbindung der Steuerdruck-Versorgungsleitung 64 mit der zum Kupplungsregelventil 3 führenden Steuerdruck-Verbindungsleitung 30 unterbrochen und die Steuerdruck-Verbindungsleitung 30 drucklos geschaltet ist.

Tritt nun eine Störung auf, die zur Abschaltung des Betriebsschaltaktuators 9 und demzufolge zum Wegfall des Steuerdruckes P_Nor führt, so wird der Ventilkolben 62 durch die Rückstellkraft der Ventilfeder 61 in seine Ruhestellung verschoben, in der die Steuerdruck-Versorgungsleitung 64 mit der Steuerdruck-Verbindungsleitung 30 verbunden ist. Dadurch wird der Ventilkolben 22 des Kupplungsregelventils 3 über den federabgewandt stirnseitig von dem dadurch zum Steuerdruck P_Not werdenden Reduzierdruck P_Red beaufschlagten Zusatzkolben 23 entgegen der Rückstellkraft der Ventilfeder 21 in eine Arbeitsstellung umgeschoben oder in dieser gehalten.

Da in dieser Arbeitsstellung des Ventilkolbens 22 in dem Kupplungsregelventil 3 die Verbindung der Versorgungsdruck-Verbindungsleitung 25 mit der Arbeitsdruckleitung 16 geöffnet ist, wird die zugeordnete Trennkupplung durch die Beaufschlagung des Druckraums 13 des Kupplungsstellzylinders 2 mit dem derart eingestellten Arbeitsdruck P_K geschlossen bzw. geschlossen gehalten, sofern der Versorgungsdruck P_V1 durch das Selbsthalteventil 5 von der Versorgungsleitung 44 auf die Versorgungsdruck-Verbindungsleitung 25 durchgeschaltet ist. Letzteres ist, wie schon zuvor beschrieben wurde, dann der Fall, wenn einerseits eine ausreichend hohe Drehzahl des Antriebsmotors oder der Ausgangswelle des Stufenschaltgetriebes vorliegt und damit das Selbsthalteventil 5 mit einem hinreichend hohen drehzahlabhängigen Steuerdruck P_D beaufschlagt wird, sowie wenn andererseits der Abschaltaktuator 8 nicht aktiviert ist und somit das Selbsthalteventil 5 nicht mit dem Abschaltdruck P_Abs beaufschlagt wird.

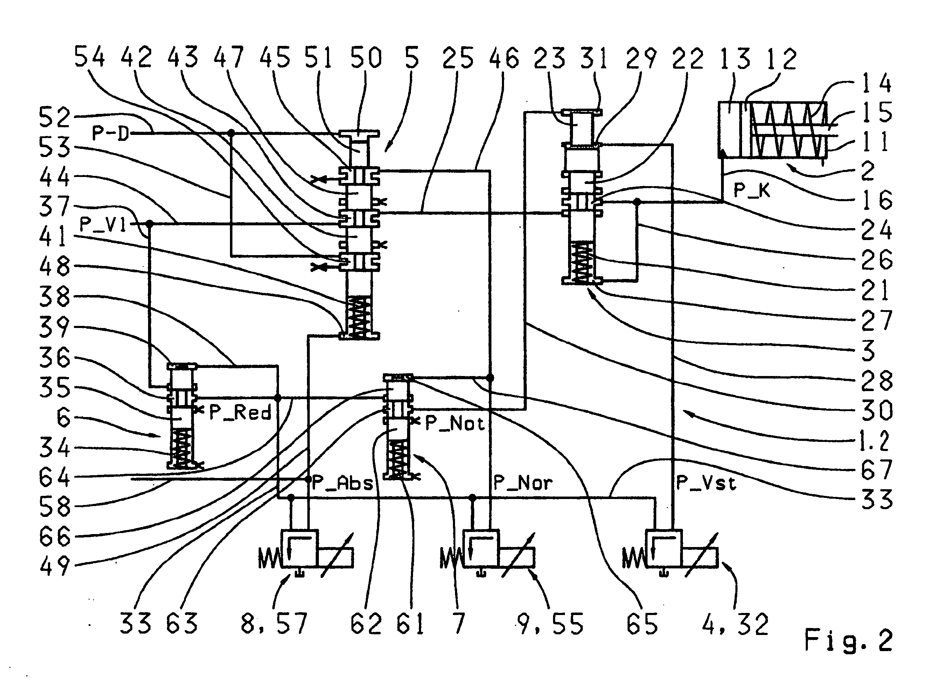

Eine erfindungsgemäße hydraulische Steuerungsvorrichtung 1.2 gemäß Fig. 2 ist gegenüber der vorbeschriebenen Ausführungsform nach Fig. 1 nur leicht modifiziert. Im Unterschied dazu ist der Abschaltaktuator 8 nunmehr als ein hydraulisches Magnetregelventil 57, beispielsweise als ein 3/2-Wege-Regelventil oder als ein 3/3-Wege-Regelventil, mit einem Anschluss der Steuerdruck-Versorgungsleitung 33, mit einem Anschluss der mit dem federseitigen stirnseitigen Druckraum 48 des Selbsthalteventils 5 verbundenen Schaltdruckleitung 49 und mit einem Anschluss einer nicht näher dargestellten Drucklosleitung ausgebildet, durch das die Schaltdruckleitung 49 im stromlosen Zustand mit der Drucklosleitung und im bestromten Zustand mit der Steuerdruck-Versorgungsleitung 33 verbindbar ist.

Durch eine Aktivierung dieses Abschaltaktuators 8, 57 mit einem hinreichend großen elektrischen Steuerstrom wird somit die zugeordnete Trennkupplung zuverlässig geöffnet oder, falls diese sich schon im geöffneten Zustand befindet, geöffnet gehalten. An die Schaltdruckleitung 49 ist eine zusätzliche Schaltdruckleitung 58 angeschlossen, die zu einem nicht näher dargestellten Schaltsteuerungselement führt. Die Schaltdrücke des Selbsthalteventils 5 und des anderen Schaltsteuerungselementes sind in diesem Fall zweckmäßig unterschiedlich hoch, so dass beide Schaltsteuerungselemente durch das Magnetregelventil 57 seriell betätigbar sind.

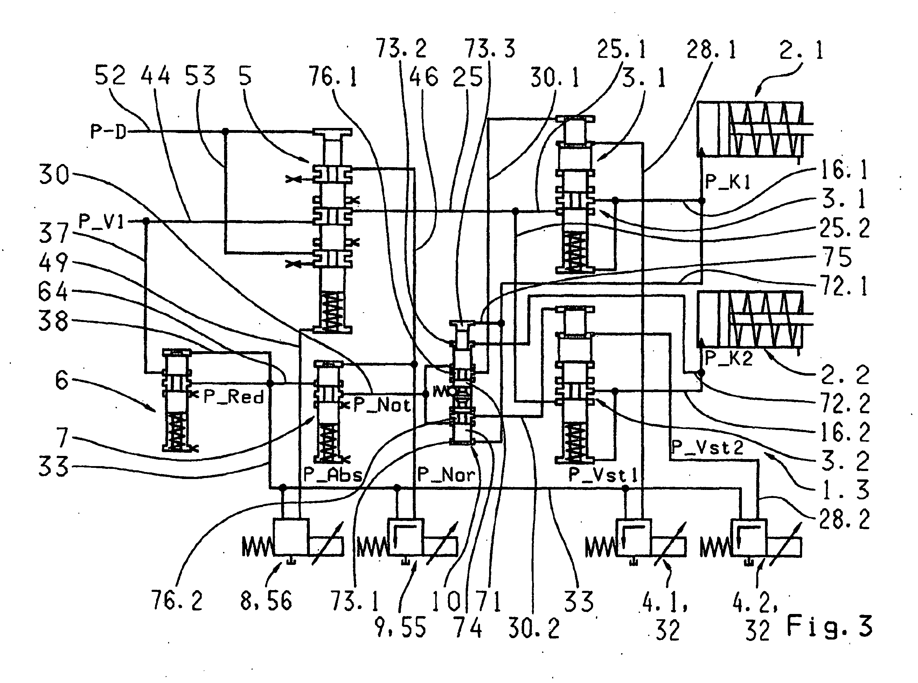

Eine erfindungsgemäße hydraulische Steuerungsvorrichtung 1.3 gemäß Fig. 3 ist bei prinzipiell ähnlichem Aufbau und gleichen Wirkzusammenhängen wie bei der Ausführungsform nach Fig. 1 im Gegensatz dazu für eine kombinierte Steuerung von zwei Trennkupplungen, insbesondere der beiden Trennkupplungen eines Doppelkupplungsgetriebes, vorgesehen und ausgebildet. Die beiden Trennkupplungen sind in der zuvor beschriebenen Weise über jeweils einen Kupplungsstellzylinder 2.1, 2.2 betätigbar, die mittels jeweils eines zugeordnetes Kupplungsregelventils 3.1, 3.2 und jeweils eines diesen vorgeschalteten Vorsteuerventilen 4.1, 4.2 steuerbar sind.

Den Kupplungsregelventilen 3.1, 3.2 ist an den Steuerdruck-Verbindungsleitungen 30.1, 30.2 ein gemeinsames druckgesteuertes Kupplungswahlventil 10 vorgeschaltet. Das Kupplungswahlventil 10 ist mit einem federzentrierten Ventilkolben 71 versehen, der in entgegengesetzter Wirkrichtung mit den Arbeitsdrücken P_K1 bzw. P_K2 der Druckräume 13 der beiden Kupplungsstellzylinder 2.1, 2.2 beaufschlagt wird. Dazu werden die Arbeitsdrücke P_K1 und P_K2 jeweils über eine an die Arbeitsdruckleitung 16.1, 16.2 des jeweiligen Kupplungsstellzylinders 2.1, 2.2 angeschlossene Anschlussleitung 72.1, 72.2 in die entsprechenden Druckräume 73.1, 73.2 des Kupplungswahlventils 10 eingeleitet.

Zudem wird der Arbeitsdruck P_K1 des ersten Kupplungsstellzylinders 2.1 über eine Anschlussleitung 75 in einen weiteren Druckraum 73.3 mit entgegengesetzter Wirkrichtung auf den Ventilkolben 71 geleitet. Da die Wirkfläche des federseitigen Kolbenbundes 74 des Ventilkolbens 71 im ersten Druckraum 73.1 aber größer ist als die Wirkfläche des am anderen axialen Ende des Ventilkolbens 71 befindlichen Kolbenbundes im dritten Druckraum 73.3, wird die Wirkrichtung der Stellkraft des Arbeitsdruckes P_K1 durch den ersten Druckraum 73.1 und die dortige Wirkfläche des Kolbenbundes 74 bestimmt.

Das Kupplungswahlventil 10 verfügt außerdem über zwei Druckräume 76.1 bzw. 76.2, die jeweils axial außen einen steuerbaren Anschluss zu der im Notbetrieb den Notsteuerdruck P_Not führenden Steuerdruck-Verbindungsleitung 30 aufweisen, innen jeweils einen steuerbaren Anschluss zu einer Drucklosleitung aufweisen und dazwischen jeweils einen Anschluss für die zu den jeweils zugeordneten Kupplungsregelventilen 3.1 und 3.2 führenden Steuerdruck-Verbindungsleitung 30.1, 30.2 aufweisen. Dabei sind die Anschlüsse der Steuerdruck-Verbindungsleitungen 30.1 und 30.2 axial jeweils auf der durch die Wirkrichtung der zugeordneten Arbeitsdrücke P_K1, P_K2 bestimmten Seite angeordnet.

Durch das Kupplungswahlventil 10 wird sichergestellt, dass der im Störungsfall verfügbare, also von dem Notlaufventil 8 im Notbetrieb als Notsteuerdruck P_Not durchgeleitete Reduzierdruck P_Red nur zu dem Kupplungsregelventil 3.1 oder 3.2 der zum Zeitpunkt der Störung weiter geschlossenen Trennkupplung geleitet wird, so dass diese Trennkupplung geschlossen wird oder bleibt, und die andere Trennkupplung geöffnet wird. Durch die Verwendung des Kupplungswahlventils 10 wird somit der Einsatz von zumindest jeweils einem Selbsthalteventil 5 sowie einem Notlaufventil 7 pro Trennkupplung vermieden, und außerdem das gleichzeitige Schließen beider Trennkupplungen im Notbetrieb sicher verhindert.

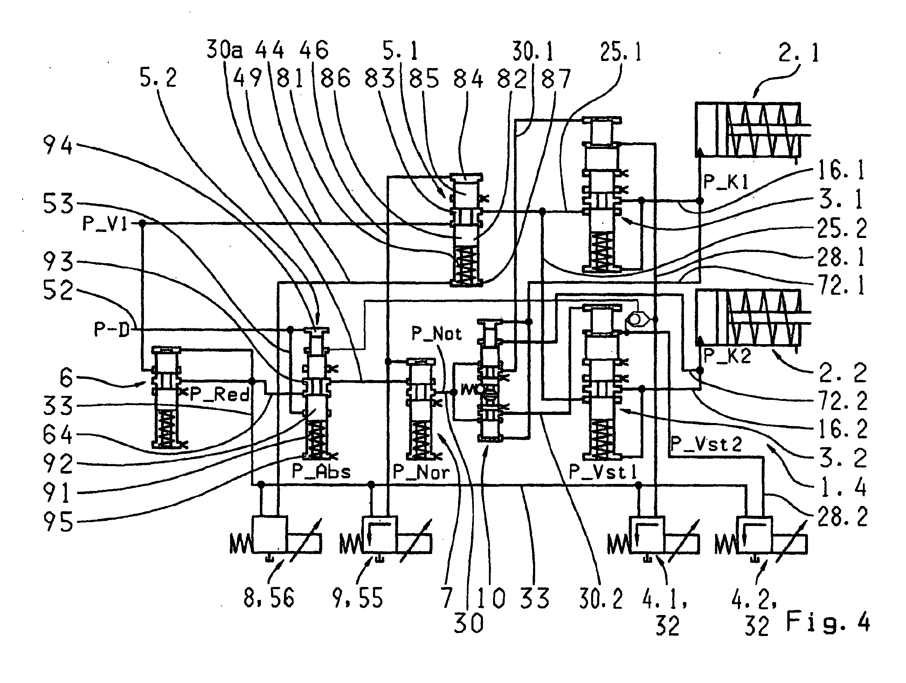

Eine weiter nicht erfindungsgemäße hydraulische Steuerungsvorrichtung 1.4 nach Fig. 4 ist ebenfalls für eine kombinierte Steuerung von zwei Trennkupplungen, insbesondere der beiden Trennkupplungen eines Doppelkupplungsgetriebes, vorgesehen und weist bei weitgehend gleicher Funktionsweise einen ähnlichen Aufbau wie die Steuerungsvorrichtung 1.3 gemäß Fig. 3 auf. Im Unterschied dazu sind bei der Ausführungsform nach Fig. 4 jedoch anstelle eines einzigen, relativ kompliziert aufgebauten und entsprechend teuren Selbsthalteventils 5 nunmehr zwei relativ einfach sowie kostengünstig aufgebaute Selbsthalteventile 5.1 und 5.2 vorgesehen.

Das erste Selbsthalteventil 5.1 ist druckgesteuert ausgebildet und weist einen einseitig durch eine Ventilfeder 81 belastbaren Ventilkolben 82 auf. Ein mittiger Druckraum 83 des Selbsthalteventils 5.1 weist federseitig einen steuerbaren Anschluss für die den Versorgungsdruck P_V1 führenden Versorgungsleitung 44, mittig einen Anschluss der zu den Versorgungsanschlüssen der beiden Kupplungsregelventile 3.1 bzw. 3.2 führenden Versorgungsdruck-Verbindungsleitungen 25.1 und 25.2 , und federabgewandt einen steuerbaren Anschluss einer nicht näher dargestellten Drucklosleitung auf.

Ein von der Ventilfeder 81 abgewandter stirnseitiger Druckraum 84 weist einen durch die Steuerkante eines federseitig benachbarten Kolbenbundes 85 steuerbaren Anschluss einer im Normalbetrieb den Steuerdruck P_Nor führenden und mit dem Betriebsschaltaktuator 9 verbundenen Steuerdruckleitung 46 auf. Der mittige Druckraum 83 ist federseitig durch eine größere Wirkfläche eines benachbarten Kolbenbundes 86 begrenzt als auf der federabgewandten Seite, wodurch im Notbetrieb die Selbsthaltefunktion des Selbsthalteventils 5.1 bei abgestelltem Betriebsschaltaktuator 9 und demzufolge weggefallenem Steuerdruck P_Nor gegeben ist.

Ein axial gegenüberliegender, die Ventilfeder 81 enthaltender stirnseitiger Druckraum 87 ist mit einem Anschluss der zu dem Abschaltaktuator 8 führenden Schaltdruckleitung 49 versehen. Hierdurch kann durch eine Aktivierung, also Bestromung des Abschaltaktuators 8 in der schon beschriebenen Weise die Versorgung der beiden Kupplungsregelventile 3.1 und 3.2 mit dem Versorgungsdruck P_V1 unterbrochen werden. Mit der Aktivierung des Abschaltventils 8 wird nämlich der federseitige stirnseitige Druckraum 87 mit dem weitgehend dem Reduzierdruck P_Red entsprechenden Abschaltdruck P_Abs beaufschlagt und damit der Ventilkolben 81 in seine Ruhestellung verschoben, in der die Verbindung der Versorgungsleitung 44 zu den Versorgungsdruck-Verbindungsleitungen 25.1 und 25.2 geschlossen ist.

Da die Zufuhr des Steuerdruckes P_Nor in den federabgewandten stirnseitigen Druckraum 84 des ersten Selbsthalteventil 5.1 durch den benachbarten Kolbenbund 85 nicht vollständig verschließbar ist, wird der Ventilkolben 81 im Normalbetrieb, also bei nicht abgestelltem Betriebsschaltaktuator 9, nach dem Abstellen des Abschaltaktuators 8 sowie dem damit verbundenen Wegfall des Abschaltdruckes P_Abs in seine Betriebsstellung zurückgeschoben und damit der Versorgungsdruck P_V1 wieder zu den Kupplungsregelventilen 3.1 bzw. 3.2 durchgeleitet.

Das zweite Selbsthalteventil 5.2 ist ebenfalls druckgesteuert ausgebildet und weist einen einseitig durch eine Ventilfeder 91 belastbaren Ventilkolben 92 auf. Ein mittiger Druckraum 93 des Selbsthalteventils 5.2, über den eine von der Steuerdruck-Versorgungsleitung 33 abzweigende und den Reduzierdruck P_Red führende Steuerdruck-Versorgungsleitung 64 mit einem zu dem Notlaufventil 7 führenden Teil der Steuerdruck-Verbindungsleitung 30a verbindbar ist, weist federseitig einen steuerbaren Anschluss der Steuerdruck-Versorgungsleitung 64, mittig einen Anschluss der Steuerdruck-Verbindungsleitung 30a und federabgewandt einen steuerbaren Anschluss einer nicht näher dargestellten Drucklosleitung auf.

Ein von der Ventilfeder 91 abgewandter stirnseitiger Druckraum 94 weist einen steuerbaren Anschluss einer den drehzahlabhängigen Steuerdruck P_D führenden Steuerdruckleitung 52 auf. Ein die Ventilfeder 91 enthaltender endseitiger Druckraum 95 weist einen steuerbaren Anschluss einer von der Steuerdruckleitung 52 abzweigenden Verbindungsleitung 53 und einen endseitig in dem Druckraum 95 angeordneten Anschluss einer nicht näher dargestellten Drucklosleitung auf, wodurch der drehzahlabhängige Druck P_D bei einem in Ruhestellung befindlichem Ventilkolben 92 und damit nahezu abgesperrtem Anschluss des stirnseitigen Druckraums 94 in einen Ölsumpf abgeführt wird.

Durch das zweite Selbsthalteventil 5.2 wird der Reduzierdruck P_Red solange zu dem Notlaufventil 7 durchgeleitet, wie die dem drehzahlabhängigen Steuerdruck P_D zugrunde liegende Drehzahl einen vorab festgelegten Grenzwert überschreitet und damit den Ventilkolben 92 in einer Betriebsstellung hält, in der die Verbindung der Steuerdruck-Versorgungsleitung 64 mit der Steuerdruck-Verbindungsleitung 30a geöffnet ist. Im Normalbetrieb, also bei vorhandenem Steuerdruck P_Nor, ist die Weiterleitung des Reduzierdruckes P_Red durch den Ventilkolben 62 des Notlaufventils 7 abgesperrt.

Im Störungsfall, also bei Wegfall des Steuerdruckes P_Nor, wird die entsprechende Verbindung in dem Notlaufventil 7 geöffnet. Der dann als Notsteuerdruck P_Not wirksame Reduzierdruck P_Red steht aber aufgrund der stirnseitigen Beaufschlagung des Ventilkolbens 92 des zweiten Selbsthalteventils 5.2 nur bei hinreichend hoher Drehzahl des Antriebsmotors oder der Ausgangswelle des Stufenschaltgetriebes (bzw. ausreichend hoher Druck P_D) zur Verfügung, so dass nur in diesem Fall der Notsteuerdruck P_Not über das Kupplungswahlventil 10 zu einem der Kupplungsregelventile 3.1 oder 3.2 weitergeleitet und damit die zugeordnete Trennkupplung geschlossen wird. Somit erfüllen beide Selbsthalteventile 5.1 und 5.2 zusammen in etwa denselben Funktionsumfang wie die zuvor im Zusammenhang mit Fig. 3 beschriebene Ausführungsformen eines einzigen Selbsthalteventils 5, welches jedoch deutlich komplexer aufgebaut ist.

### Bezugszeichen

- 1.1: Hydraulische Steuerungsvorrichtung
- 1.2: Hydraulische Steuerungsvorrichtung
- 1.3: Hydraulische Steuerungsvorrichtung
- 1.4: Hydraulische Steuerungsvorrichtung
- 2: Kupplungsstellzylinder
- 2.1: Kupplungsstellzylinder
- 2.2: Kupplungsstellzylinder
- 3: Kupplungsregelventil
- 3.1: Kupplungsregelventil
- 3.2: Kupplungsregelventil
- 4: Vorsteuerventil
- 4.1: Vorsteuerventil
- 4.2: Vorsteuerventil
- 5: Selbsthalteventil
- 6: Druckminderventil
- 7: Notlaufventil
- 8: Abschaltaktuator
- 9: Betriebsschaltaktuator
- 10: Kupplungswahlventil
- 11: Zylinderkörper
- 12: Kolben
- 13: Druckrau m
- 14: Rückstellfeder
- 15: Kolbenstange
- 16: Arbeitsdruckleitung
- 16.1: Arbeitsdruckleitung
- 16.2: Arbeitsdruckleitung
- 21: Ventilfeder
- 22: Ventilkolben
- 23: Zusatzkolben
- 24: Druckraum
- 25: Versorgungsdruck-Verbindungsleitung
- 25.1: Versorgungsdruck-Verbindungsleitung
- 25.2: Versorgungsdruck-Verbindungsleitung
- 26: Rückführungsleitung
- 27: Druckraum
- 28: Steuerdruckleitung
- 28.1: Steuerdruckleitung
- 28.2: Steuerdruckleitung
- 29: Druckraum
- 30: Steuerdruck-Verbindungsleitung
- 30.1: Steuerdruck-Verbindungsleitung
- 30.2: Steuerdruck-Verbindungsleitung
- 30a: Steuerdruck-Verbindungsleitung
- 31: Druckraum
- 32: Magnetregelventil
- 33: Steuerdruck-Versorgungsleitung
- 34: Ventilfeder
- 35: Ventilkolben
- 36: Druckraum
- 37: Verbindungsleitung
- 38: Rückführungsleitung
- 39: Druckraum
- 41: Ventilfeder
- 42: Ventilkolben
- 43: Druckraum
- 44: Versorgungsleitung
- 45: Druckraum
- 46: Steuerdruckleitung
- 47: Kolbenbund
- 48: Druckraum
- 49: Schaltdruckleitung
- 50: Druckraum
- 51: Kolbenbund
- 52: Steuerdruckleitung
- 53: Verbindungsleitung
- 54: Druckraum
- 55: Magnetregelventil
- 56: Magnetschaltventil
- 57: Magnetregelventil
- 58: Schaltdruckleitung
- 61: Ventilfeder
- 62: Ventilkolben
- 63: Druckraum
- 64: Steuerdruck-Versorgungsleitung
- 65: Druckraum
- 66: Kolbenbund
- 67: Steuerdruckleitung
- 71: Druckraum
- 72.1: Anschlussleitung
- 72.2: Anschlussleitung
- 73.1: Druckraum
- 73.2: Druckraum
- 73.3: Druckraum
- 74: Kolbenbund
- 75: Anschlussleitung
- 76.1: Druckraum
- 76.2: Druckraum
- 81: Ventilfeder
- 82: Ventilkolben
- 83: Druckraum
- 84: Druckraum
- 85: Kolbenbund
- 86: Kolbenbund
- 87: Druckraum
- 91: Ventilfeder
- 92: Ventilkolben
- 93: Druckraum
- 94: Druckraum
- 95: Druckraum

- P_Abs: Abschaltdruck
- P_Abs_max: maximaler Abschaltdruck
- P_D: Drehzahlabhängiger Steuerdruck
- P_K: Arbeitsdruck
- P_K1: Arbeitsdruck
- P_K2: Arbeitsdruck
- P_Nor: Steuerdruck
- P_Not: Notsteuerdruck
- P_Red: Reduzierdruck
- P_Vst: Vorsteuerdruck
- P_Vst1: Vorsteuerdruck
- P_Vst2: Vorsteuerdruck
- P_V1: Versorgungsdruck

## Patentansprüche

1. Druckmittelbetätigbare Steuemngsvomchtung (1.1, 1.2, 1.3, 1.4) eines automatisierten Stufenschaltgetriebes, mit einem ansteuerbaren Kupplungsregelventil (3, 3.1,3.2) zur Steuerung eines Kupplungsstellzylinders (2, 2.1, 2.2) einer im Kraftluss zwischen einem Antriebsmotor und einer Eingangswelle des Stufenschaltgetriebes angeordneten aktiv schließbaren Trennkupplung, und mit einem im Druckversorgungszweig des Kupplungsregelventils (3, 3.1,3.2) angeordneten Selbsthalteventil (5) zur drehzahlabhängigen Notbetätigung der Trennkupplung, wobei ein elektrisch ansteuerbarer Abschaltaktuator (8) vorgesehen ist, der derart ausgebildet und mit dem Selbsthalteventil (5) in Wirkverbindung steht, dass der ventilkolben (42) des Selbsthaitteventils (5) im bestromten Zustand des Abschaltaktuators (8) in eine die Druckversorgung des Kupplungsregelventils (3, 3.1, 3.2) absperrende Ruhestellung und im stromlosen Zustand des Abschattaktuators (8) in eine durch die einwirkenden Steuerdrücke bestimmte Betriebsstellung bringbar ist, **dadurch gekennzeichnet, dass** der Abschaltaktuator (8) als ein hydraulisches Magnetschaltventil (56) mit einem Anschluss einer einen Reduzierdruck (P_Red) führenden Steuerdruck-Versorgungsleitung (33), mit einem Anschluss einer mit einem die Ventilfeder (41) enthaltenden stirnseitigen Druckraum (48) des Selbsthalteventils (5) verbundenen Schaltdruckleitung (49) und mit einem Anschluss einer Drucklosleitung ausgebildet ist, durch das die Schaltdruckleitung (49) im stromlosen Zustand des Abschaltaktuators (8) mit der Drucklosleitung und im bestromten Zustand mit der Steuerdruck-Versorgungsleitung (33) verbunden ist und dass das Setbsthalteventil (5) versehen ist mit einem mittigen Druckraum (43), der federseitig einen steuerbaren Anschluss einer einen Versorgungsdruck (P_V1) führenden Versorgungsleitung (44) aufweist, der mittig einen Anschluss einer zu dem Versorgungsanschluss des Kupplungsregelventils (3) führenden Versorgungsdruck-Verbindungsleitung (25) aufweist, und der federabgewandt einen steuerbaren Anschluss einer Drucklosteitung aufweist, sowie mit einem weiteren mittigen Druckraum (45), der einen Anschluss einer im Normalbetrieb einen Steuerdruck (P_Nor) führenden Steuerdruckleitung (46) aufweist, und der federseitig durch eine größere Wirkfläche eines benachbarten Kolbenbundes (47) begrenzt ist als auf der federabgewandten Seite, und mit einem eine Ventilfeder (41) enthaltenden stirnseitigen Druckraum (48), der einen Anschluss der zu dem Abschaltaktuator (8) führenden Schaltdruckleitung (49) aufweist, sowie mit einem von der Ventilfeder (41) abgewandten stirnseitigen Druckraum (50), der einen durch die Steuerkante eines federseitig benachbarten Kolbenbundes (51) verschließbaren Anschluss einer einen drehzahlabhängigen Steuerdruck (P_D) führenden Steuerdruckleitung (52) aufweiset.

2. Steuerungsvorrichtung nach Anspruch 1, **dadurch gekennzeichnet, dass** mindestens eine weitere, zu einem anderen hydraulisch steuerbaren Schaltsteuerungsetement führende Schattdruckleitung (58) an die Schattdruckleitung (49) oder unmittelbar an den Anschluss der Schaltdruckleitung (49) des Magnetregelventils (57) angeschlossen ist, wobei die Schaltdrücke des Selbsthalteventils (5) und des anderen Schaltsteuerungselementes unterschiedlich hoch sind.

3. Steuerungsvorrichtung nach einem der Ansprüche 1 oder 2, **dadurch gekennzeichnet, dass** das Selbsthalteventil (5) mit einem weiteren ringen Druckraum versehen ist, über den eine den Reduzierdruck (P_Red) führende Steuerdruck-Vengorgungsleitung (64) mit einer zu einem der Ventilfeder (21) abgewandten stirnseitigen Druckraum (31) des Kupplungsregelventils (3) führenden und mit einem Absperrelement (7) versehenen Steuerdruck-Verbindungsleitung (30a, 30, 30.1, 30.2) verbindbar ist, wobei der Druckraum federseitig einen steuerbaren Anschluss der Steuerdruck-Versorgungsleitung (64) aufweist, mittig einen Anschluss der Steuerdruck-Verbindungsleitung (30, 30a) aufweist, und federabgewandt einen steuerbaren Anschluss einer Drucklosleitung aufweist.

4. Steuerungsvorrichtung nach Anspruch 3, **dadurch gekennzeichnet, dass** das Absperrelement als ein druckgesteuertes Notlaufventil (7) ausgebildet ist, das versehen ist mit einem mittigen Druckraum (63), der federseitig einen steuerbaren Anschluss einer Drucklosleitung aufweist, der mittig einen Anschluss der zu dem Kupplungsregelventil (3, 3.1, 3.2) führenden Steuerdruck-Verbindungsleitung (30, 30.1. 30.2) aufweist, und der federabgewandt einen steuerbaren Anschluss der von der Steuerdruck-Versorgungsleitung (33) oder dem Selbsthalteventil (5) kommenden Steuerdruckleitung (30a, 64) aufweist, und mit einem der Ventilfeder (61) abgewandten stirnseitigen Druckraum (65), der durch eine Wirkfläche eines federseitig benachbarten Kolbenbundes (66) begrenzt ist sowie einen Anschluss einer im Normalbetrieb einen Steuerdruck (P_Nor) führenden Steuerdruckleitung (67) aufweist.

5. Steuerungsvorrichtung nach zumindest einem der vorhergehenden Ansprüche, **dadurch gekennzeichnet, dass** zur Auslösung des Notbetriebs ein elektrisch steuerbarer Betriebsschaltaktuator (9) vorgesehen ist, durch den die im Normalbetrieb den Steuerdruck (P_Nor) führende, zu dem Selbsthalteventil,(5,5.1) und/oder zu dem Notlaufventil (7) führende Steuerdruckleitung (46, 67) im bestromten Zustand des Betriebsschaltaktuators (9) mit diesem Steuerdruck (P_Nor) versorgbar und im stromlosen Zustand des Betriebsschaltaktuators (9) drucklos schaltbar ist.

6. Steuerungsvorrichtung nach anspruch **dadurch gekennzeichnet, dass** der Betriebsschaltäktuator (9) als ein hydraulisches Magnetschaltventil mit einem Anschluss der Steuerdruck-Versorgungsleitung (33), mit einem Anschluss einer mit der im Normalbetrieb den Steuerdruck (P_Nor) führenden Steuerdruckleitung (46, 67) des Selbsthalteventils (5, 5.1) und/oder des Notlaufventils (7), und mit einem Anschluss einer Drucklosleitung ausgebildet ist, durch das die Steuerdruckleitung (46, 67) im stromlosen Zustand des Betriebsschaltaktuators (9) mit der Drucklosleitung und im bestromten Zustand mit der Steuerdruck-Versorgungsleitung (33) verbunden ist.

7. Steuerungsvorrichtung nach Anspruch 5, **dadurch gekennzeichnet, dass** der Betriebsschaltaktuator (9) als ein hydraulisches Magnetregelventil (55) mit einem Anschluss der Steuerdruck-Versorgungsleitung (33), mit einem Anschluss einer mit der im Normalbetrieb den Steuerdruck (P_Nor) führenden Steuerdruckleitung (46, 67) des Selbsthalteventils (5,5.1) und/oder des Notlaufventils (7), und mit einem Anschluss einer Drucklosleitung ausgebildet ist, mittels dem die Steuerdruckleitung (46; 67) im stromlosen Zustand mit der Drucklosleitung und im bestromten Zustand mit der Steuerdruck-Versorgungsleitung (33) verbindbar ist.

8. Steuerungsvorrichtung nach zumindest einem der Ansprüche 1 bis 7, **dadurch gekennzeichnet, dass** zur kombinierten Steuerung von zwei jeweils mit einem Kupplungsregelventil (3.1, 3.2) versehenen Kupplungsstellzylindern (2.1, 2.2) eines Doppelkupplungsgetriebes ein druckgesteuertes Kupplungswahlventil (10) vorgesehen ist, dessen Ventilkolben (71) federzentriert ist und in entgegengesetzter Wirkrichtung mit den über Anschlussleitungen (72.1, 72.2) von den beiden Kupplungsstellzylindem (2.1, 2.2) zugeführten Arbeitsdrücken (P_K1. P_K2) beaufschlagt wird, und das zwei Druckräume (73.1.73.2) aufweist, die jeweils axial beidseitig außen einen steuerbaren Anschluss der im Notbetrieb den Notsteuerdruck (P_Not) führenden Steuerdruck-Verbindungsleitung (30) aufweisen, axial innen einen steuerbaren Anschluss einer Drucklosleitung aufweisen, und dazwischen einen über jeweils eine Steuerdruck-Verbindungsleitung (30.1, 30.2) zu dem der Ventilfeder (21) abgewandten stirnseitigen Druckraum (31) eines der beiden Kupplungsregetventile (3.1, 3.2) führenden Anschluss aufweisen, wobei die Anschlüsse der Steuerdruck-Verbindungeleittingen (30.1, 30.2) axial jeweils auf der durch die Wirkrichtung der zugeordneten Arbeitsdrücke (P_K1, P_K2) bestimmten axialen Seite des Kupplungswahlventils (10) angeordnet sind.

## Claims

1. Control apparatus (1.1, 1.2, 1.3, 1.4) of an automated multi-step change-speed gearbox, which control apparatus (1.1, 1.2, 1.3, 1.4) can be actuated by pressure medium, having an actuable clutch regulating valve (3, 3.1, 3.2) for controlling a clutch actuating cylinder (2, 2.1, 2.2) of a separating clutch which can be closed actively and is arranged in the force flow between a drive motor and an input shaft of the multi-step change-speed gearbox, and having a self-locking valve (5) which is arranged in the pressure-supply branch of the clutch regulating valve (3, 3.1, 3.2) for the emergency actuation of the separating clutch in a manner which is dependent on the rotational speed, an electrically actuable switch-off actuator (8) being provided which is configured and is operatively connected to the self-locking valve (5) in such a way that, in the state of the switch-off actuator (8) in which current is applied to it, the valve piston (42) of the self-locking valve (5) can be brought into a rest position which shuts off the pressure supply of the clutch regulating valve (3, 3.1, 3.2) and, in the currentless state of the switch-off actuator (8) into an operating position which is defined by the acting control pressures, **characterized in that** the switch-off actuator (8) is configured as a hydraulic solenoid switching valve (56) with a connection of a control-pressure supply line (33) which guides a reducing pressure (P_Red), with a connection of a shifting-pressure line (49) which is connected to an end-side pressure space (48) of the self-locking valve (5), which pressure space (48) contains the valve spring (41), and with a connection of a pressureless line, by way of which hydraulic solenoid switching valve (56) the shifting-pressure line (49) is connected to the pressureless line in the currentless state of the switch-off actuator (8) and is connected to the control-pressure supply line (33) in the current-applied state, and **in that** the self-locking valve (5) is provided with a central pressure space (43) which has, on the spring side, a controllable connection of a supply line (44) which guides a supply pressure (P_V1), which has, centrally, a connection of a supply-pressure connecting line (25) which leads to the supply connection of the clutch regulating valve (3), and which has, remote from the spring, a controllable connection of a pressureless line, and with a further central pressure space (45) which has a connection of a control-pressure line (46) which guides a control pressure (P_Nor) in normal operation, and which is delimited by a larger active face of an adjacent piston collar (47) on the spring side than on the side which is remote from the spring, and with an end-side pressure space (48) which contains a valve spring (41) and has a connection of the shifting-pressure line (49) which leads to the switch-off actuator (8), and with an end-side pressure space (50) which faces away from the valve spring (41) and has a connection of a control-pressure line (52) which guides a control pressure (P_D) which is dependent on the rotational speed, which connection can be closed by the control edge of an adjacent piston collar (51) on the spring side.

2. Control apparatus according to Claim 1, **characterized in that** at least one further shifting-pressure line (58) which leads to another hydraulically controllable shifting-control element is connected to the shifting-pressure line (49) or directly to the connection of the shifting-pressure line (49) of the solenoid regulating valve (57), the shifting pressures of the self-locking valve (5) and of the other shifting-control element being of different magnitude.

3. Control apparatus according to one of Claims 1 or 2, **characterized in that** the self-locking valve (5) is provided with a further central pressure space, via which a control-pressure supply line (64) which guides the reducing pressure (P_Red) can be connected to a control-pressure connecting line (30a, 30, 30.1, 30.2) which is provided with a shut-off element (7) and leads to an end-side pressure space (31) of the clutch regulating valve (3), which end-side pressure space (31) is remote from the valve spring (21), the pressure space having, on the spring side, a controllable connection of the control-pressure supply line (64), having, centrally, a connection of the control-pressure connecting line (30, 30a), and having, remote from the spring, a controllable connection of a pressureless line.

4. Control apparatus according to Claim 3, **characterized in that** the shut-off element is configured as a pressure-controlled emergency-running valve (7) which is provided with a central pressure space (63) which has, on the spring side, a controllable connection of a pressureless line, which has, centrally, a connection of the control-pressure connecting line (30, 30.1, 30.2) which leads to the clutch regulating valve (3, 3.1, 3.2), and which has, remote from the spring, a controllable connection of the control-pressure line (30a, 64) which comes from the control-pressure supply line (33) or the self-locking valve (5), and with an end-side pressure space (65) which is remote from the valve spring (61), is delimited by an active face of an adjacent piston collar (66) on the spring side and has a connection of a control-pressure line (67) which guides a control pressure (P_Nor) in normal operation.

5. Control apparatus according to at least one of the preceding claims, **characterized in that**, in order to trigger the emergency operation, an electrically controllable operating shifting actuator (9) is provided, by way of which the control-pressure line (46, 67) which, in normal operation, guides the control pressure (P_Nor) and leads to the self-locking valve (5, 5.1) and/or to the emergency-running valve (7) can be supplied with the said control pressure (P_Nor) in the state of the operating shifting actuator (9) in which current is applied to it, and can be switched to a pressureless state in the currentless state of the operating shifting actuator (9).

6. Control apparatus according to Claim 5, **characterized in that** the operating shifting actuator (9) is configured as a hydraulic solenoid shifting valve with a connection of the control-pressure supply line (33), with a connection of a control-pressure line (46, 67) of the self-locking valve (5, 5.1) and/or of the emergency-running valve (7), which control-pressure line (46, 67) guides the control pressure (P_Nor) in normal operation, and with a connection of a pressureless line, by way of which hydraulic solenoid switching valve the control-pressure line (46, 67) is connected to the pressureless line in the currentless state of the operating shifting actuator (9) and is connected to the control-pressure supply line (33) in the current-applied state.

7. Control apparatus according to Claim 5, **characterized in that** the operating shifting actuator (9) is configured as a hydraulic solenoid regulating valve (55) with a connection of the control-pressure supply line (33), with a connection of a control-pressure line (46, 67) of the self-locking valve (5, 5.1) and/or of the emergency-running valve (7), which control-pressure line (46, 67) guides the control pressure (P_Nor) in normal operation, and with a connection of a pressureless line, by means of which hydraulic solenoid regulating valve (55) the control-pressure line (46, 67) can be connected to the pressureless line in the currentless state and can be connected to the control-pressure supply line (33) in the current-applied state.

8. Control apparatus according to at least one of Claims 1 to 7, **characterized in that**, for the combined control of two clutch actuating cylinders (2.1, 2.2) of a dual clutch transmission which are provided in each case with a clutch regulating valve (3.1, 3.2), a pressure-controlled clutch selection valve (10) is provided, the valve piston (71) of which is spring-centred, is loaded in the opposite acting direction with the work pressures (P_K1, P_K2) which are fed from the two clutch actuating cylinders (2.1, 2.2) via connecting lines, and has two pressure spaces (73.1, 73.2) which have, in each case axially on the outside on both sides, a controllable connection of the control-pressure connecting line (30) which guides the emergency control pressure (P_Not) in emergency operation, have, axially on the inside, a controllable connection of a pressureless line, and have, between them, a connection which leads via in each case one control-pressure connecting line (30.1, 30.2) to the end-side pressure space (31) of one of the two clutch regulating valves (3.1, 3.2) which end-side pressure space (31) is remote from the valve spring (21), the connections of the control-pressure connecting lines (30.1, 30.2) being arranged axially in each case on that axial side of the clutch selection valve (10) which is defined by the acting direction of the associated work pressures (P_K1, P_K2).

## Revendications

1. Dispositif de commande pouvant être actionné par un fluide sous pression (1.1, 1.2, 1.3, 1.4) pour une boîte de vitesses à rapports étagés automatisée, comprenant une soupape de régulation d'embrayage commandable (3, 3.1, 3.2) pour la commande d'un cylindre de commande d'embrayage (2, 2.1, 2.2) d'un embrayage de séparation pouvant être fermé activement, disposé dans le flux de forces entre un moteur d'entraînement et un arbre d'entrée de la boîte de vitesses à rapports étagés, et comprenant une soupape auto-rétentive (5) disposée dans la branche d'alimentation en pression de la soupape de régulation d'embrayage (3, 3.1, 3.2), pour l'actionnement d'urgence, en fonction du régime, de l'embrayage de séparation, un actionneur de coupure (8) à commande électrique étant prévu, lequel est réalisé et est en liaison fonctionnelle avec la soupape auto-rétentive (5) de telle sorte que le piston de soupape (42) de la soupape auto-rétentive (5), dans l'état alimenté en courant de l'actionneur de coupure (8), puisse être amené dans une position de repos bloquant l'alimentation en pression de la soupape de régulation d'embrayage (3, 3.1, 3.2), et dans l'état non alimenté en courant de l'actionneur de coupure (8), puisse être amené dans une position fonctionnelle déterminée par les pressions de commande s'exerçant, **caractérisé en ce que** l'actionneur de coupure (8) est réalisé sous forme d'électrovanne hydraulique (56) avec un raccord à une conduite d'alimentation en pression de commande (33) acheminant une pression de réduction (P_Red), avec un raccord à une conduite de pression de commutation (49) connectée à un espace de pression (48) de la soupape auto-rétentive (5), du côté frontal, contenant le ressort de soupape (41), et avec un raccord à une conduite sans pression, par lequel la conduite de pression de commutation (49), dans l'état non alimenté en courant de l'actionneur de coupure (8), est connectée à la conduite sans pression, et dans l'état alimenté en courant, est connectée à la conduite d'alimentation en pression de commande (33), et **en ce que** la soupape auto-rétentive (5) est pourvue d'un espace de pression central (43), qui présente, du côté du ressort, un raccord commandable d'une conduite d'alimentation (44) acheminant une pression d'alimentation (P_V1), qui présente centralement un raccord d'une conduite de connexion de pression d'alimentation (25) conduisant au raccord d'alimentation de la soupape de régulation d'embrayage (3), et qui présente à l'opposé du ressort, un raccord commandable d'une conduite sans pression, et est pourvue d'un autre espace de pression central (45), qui présente un raccord d'une conduite de pression de commande (46) acheminant, pendant le fonctionnement normal, une pression de commande (P_Nor), et qui est limité du côté du ressort par une plus grande surface d'action d'un épaulement de piston adjacent (47), que du côté opposé au ressort, et d'un espace de pression (48) du côté frontal contenant un ressort de soupape (41), qui présente un raccord à la conduite de pression de commutation (49) conduisant à l'actionneur de coupure (8), ainsi que d'un espace de pression (50) du côté frontal opposé au ressort de soupape (41), qui présente un raccord d'une conduite de pression de commande (52) acheminant une pression de commande dépendant du régime (P_D), qui peut être fermé par l'arête de commande d'un épaulement de piston (51) adjacent du côté du ressort.

2. Dispositif de commande selon la revendication 1, **caractérisé en ce qu'**au moins une autre conduite de pression de commutation (58) conduisant à un autre élément de commande de commutation commandable hydrauliquement, est raccordée à la conduite de pression de commutation (49) ou directement au raccord de la conduite de pression de commutation (49) de l'électrovanne (57), les pressions de commutation de la soupape auto-rétentive (5) et de l'autre élément de commande de commutation étant différentes.

3. Dispositif de commande selon l'une quelconque des revendications 1 ou 2, **caractérisé en ce que** la soupape auto-rétentive (5) est pourvue d'un autre espace de pression central, par le biais duquel une conduite d'alimentation en pression de commande (64) acheminant une pression de réduction (P_Red) peut être connectée à une conduite de connexion de pression de commande (30a, 30, 30.1, 30.2) conduisant à un espace de pression (31) de la soupape de régulation d'embrayage (3), du côté frontal et à l'opposé du ressort de soupape (21), et pourvue d'un élément de blocage (7), l'espace de pression présentant du côté du ressort, un raccord commandable de la conduite d'alimentation en pression de commande (64), présentant centralement un raccord à la conduite de connexion de la pression de commande (30, 30a), et présentant à l'opposé du ressort, un raccord commandable à une conduite sans pression.

4. Dispositif de commande selon la revendication 3, **caractérisé en ce que** l'élément de blocage est réalisé sous forme de soupape de secours (7) commandée en pression, qui est pourvue d'un espace de pression central (63) qui présente, du côté du ressort, un raccord commandable à la conduite sans pression, qui présente, centralement un raccord à la conduite de connexion de pression de commande (30, 30.1, 30.2) conduisant à la soupape de régulation d'embrayage (3, 3.1, 3.2), et qui présente, à l'opposé du ressort, un raccord commandable à la conduite de pression de commande (30a, 64) provenant de la conduite d'alimentation en pression de commande (33) ou de la soupape auto-rétentive (5), et qui est pourvue d'un espace de pression (65) du côté frontal, opposé au ressort de soupape (61), qui est limité par une surface d'action d'un épaulement de piston (66) adjacent du côté du ressort, et qui présente un raccord à une conduite de pression de commande (67) acheminant une pression de commande (P_Nor) pendant un fonctionnement normal.

5. Dispositif de commande selon au moins l'une quelconque des revendications précédentes, **caractérisé en ce que** pour déclencher le fonctionnement de secours, on prévoit un actionneur de commutation de fonctionnement (9) pouvant être commandé électriquement, par le biais duquel la conduite de pression de commande (46, 67) acheminant la pression de commande (P_Nor) pendant un fonctionnement normal, conduisant à la soupape auto-rétentive (5) et/ou à la soupape de secours (7), peut être alimentée avec cette pression de commande (P_Nor) dans l'état alimenté en courant de l'actionneur de commutation de fonctionnement (9), et peut être commutée sans pression dans l'état non alimenté en courant de l'actionneur de commutation de fonctionnement (9).

6. Dispositif de commande selon la revendication 5, **caractérisé en ce que** l'actionneur de commutation de fonctionnement (9) est réalisé sous forme d'électrovanne hydraulique avec un raccord à la conduite d'alimentation en pression de commande (33), avec un raccord à une conduite de pression de commande (46, 67) de la soupape auto-rétentive (5, 5.1) et/ou de la soupape de secours (7) acheminant la pression de commande (P_Nor) pendant le fonctionnement normal, et avec un raccord à une conduite sans pression, par le biais de laquelle la conduite de pression de commande (46, 67) est connectée dans l'état non alimenté en courant de l'actionneur de commutation de fonctionnement (9) à la conduite sans pression, et dans l'état alimenté en courant, à la conduite d'alimentation en pression de commande (33).

7. Dispositif de commande selon la revendication 5, **caractérisé en ce que** l'actionneur de commutation de fonctionnement (9) est réalisé sous forme d'électrovanne hydraulique (55) avec un raccord à la conduite d'alimentation en pression de commande (33), avec un raccord à une conduite de pression de commande (46, 67) de la soupape auto-rétentive (5, 5.1) et/ou de la soupape de secours (7) acheminant la pression de commande (P_Nor) pendant le fonctionnement normal, et avec un raccord à une conduite sans pression, au moyen de laquelle la conduite de pression de commande (46, 67) peut être connectée dans l'état non alimenté en courant, à la conduite sans pression, et dans l'état alimenté en courant, à la conduite d'alimentation en pression de commande (33).

8. Dispositif de commande selon au moins l'une quelconque des revendications 1 à 7, **caractérisé en ce que** pour la commande combinée de deux cylindres de commande d'embrayage (2.1, 2.2) d'une boîte de vitesses à double embrayage, pourvus chacun d'une soupape de régulation d'embrayage (3.1, 3.2), on prévoit une soupape de sélection d'embrayage commandée en pression (10), dont le piston de soupape (71) est centré par ressort et est sollicité dans le sens d'action opposé par les pressions de travail (P_K1, P_K2) acheminées par le biais des conduites de raccordement (72.1, 72.2) par les deux cylindres de commande d'embrayage (2.1, 2.2), et qui présente deux espaces de pression (73.1, 73.2), qui présentent à chaque fois axialement de chaque côté à l'extérieur un raccord commandable à la conduite de connexion de pression de commande (30) acheminant la pression de commande de secours (P_Not) pendant le fonctionnement de secours, axialement à l'intérieur un raccord commandable à une conduite sans pression, et entre les deux un raccord conduisant, par le biais d'une conduite de connexion de pression de commande respective (30.1, 30.2), à l'espace de pression 931) du côté frontal opposé au ressort de soupape (21) de l'une des deux soupapes de régulation d'embrayage (3.1, 3.2), les raccords aux conduites de connexion de pression de commande (30.1, 30.2) étant disposés axialement à chaque fois du côté axial de la soupape de sélection d'embrayage (10) défini par le sens d'action des pressions de travail associées (P_K1, P_K2).
